# EUROPÄISCHE PATENTSCHRIFT

(11) **EP 4 073 894 B1**
(45) Veröffentlichungstag und Bekanntmachung des Hinweises auf die Patenterteilung: **01.11.2023**
(21) Anmeldenummer: 20838372.9
(22) Anmeldetag: 11.12.2020
(51) Int. Cl.: H02G 11/00, B25J 19/00, F16G 13/16, H02G 3/04

(54) **LEITUNGSFÜHRUNGSVORRICHTUNG FÜR REINRAUMANWENDUNGEN SOWIE STÜTZKETTE UND KETTENGLIED HIERFÜR**
LINE GUIDE DEVICE FOR CLEANROOM APPLICATIONS, AND ALSO SUPPORTING CHAIN AND CHAIN LINK FOR IT
DISPOSITIF DE GUIDAGE DE LIGNE POUR DES APPLICATIONS DE SALLE BLANCHE, AINSI QUE CHAÎNE DE SUPPORT ET MAILLON DE CHAÎNE POUR CELUI-CI

(30) Priorität: 13.12.2019 DE 202019106979 U
(43) Veröffentlichungstag der Anmeldung: 19.10.2022
(73) Patentinhaber: Igus GmbH, 51147 Köln (DE)
(72) Erfinder: BARTEN, Dominik, 53340 Meckenheim (DE); MATTONET, Peter, 51515 Kürten (DE)
(74) Vertreter: Lippert Stachow Patentanwälte Rechtsanwälte
(86) Internationale Anmeldenummer: PCT/EP2020/085861
(87) Internationale Veröffentlichungsnummer: WO 2021/116467

(56) Entgegenhaltungen:
- DE-A1- 2 141 709
- DE-A1-102012 100 359
- DE-B- 1 281 350

## Beschreibung

Die Erfindung liegt auf dem Gebiet der Leitungsführungsvorrichtungen, insbesondere für Reinraumanwendungen, zum geschützten dynamischen Führen von Versorgungsleitungen wie Kabeln, Schläuchen oder dgl. zwischen zwei Anschlussstellen, von denen mindestens eine relativ zur anderen beweglich ist. Derartige dynamische bzw. aktive Leitungsführungsvorrichtungen schützen die Leitungen gegen ungewollte Beanspruchungen in der Bewegung, meist zwischen einem stationären Anschluss und einem beweglichen Verbraucher, z.B. an einer Maschine. Sie sind typisch linear bzw. in einer Bewegungsebene entlang einer Längsrichtung hin- und hergehend verfahrbar und bilden typisch zwei im Wesentlichen gestreckte Trume und einen in etwa U-förmigen Umlenkbogen dazwischen.

Die Erfindung betrifft Stützketten zum Stützen einer Leitungsführungsvorrichtung nach den Ansprüchen 1, 9 und 13.

Die Erfindung zielt speziell auf eine für Reinraumanwendungen bestimmte Leitungsführungsvorrichtung mit einer flexiblen Umhüllung, welche zum staubschützenden Umhüllen von Versorgungsleitungen eine Anzahl nebeneinander angeordneter und in der Längsrichtung erstreckter Aufnahmekanäle aufweist, in denen typisch jeweils mindestens eine Versorgungsleitung aufgenommen ist. Die Umhüllung soll insbesondere verhindern, dass Abrieb der Leitungen, welcher durch Fahrbewegung unvermeidbar entsteht, in die Umgebung abgegeben wird. Zudem kann eine Umhüllung aus geeignetem Material das Abriebverhalten insgesamt verbessern.

Zur Stabilisierung bzw. für größere Längen werden dabei sogenannte Stützketten eingesetzt zum Stützen der Leitungsführung, insbesondere in der gestreckten Lage eines freitragenden bzw. nicht aufliegenden Trums. Die Stützkette kann hierzu, anstelle einer Leitung, in einem Aufnahmekanal angeordnet werden und gestreckte Stellungen zur Bildung der Trume sowie eine bogenförmige Stellung zur Bildung eines Umlenkbogens einnehmen, wobei die Stützkette auch den gewünschten Radius vorgibt.

Insbesondere in dieser Eigenschaft unterscheiden sich gattungsgemäße Stützketten von sogenannten Transportketten, die als Rollen- der Buchsenketten ausgeführt werden können und lediglich auf Zug beansprucht werden. DE1281350B beschreibt z.B. eine Transportkette aus Kettengliedern, die durch kreiszylindrische Gelenkbolzen frei schwenkbar miteinander verbunden sind. Auf die Gelenkbolzen sind zusätzliche U-förmige "Transportglieder" als Abdeckung von oben aufgesetzt. Die "Transportglieder" weisen oberseitig eine Transportplatte und bilden dadurch in Strecklage eine oberseitig geschlossene Fläche zum Aufliegen von Transportguts. Die Stirnflächen der Transportplatten wirken dabei als Streckanschlagflächen. Ein weiteres Beispiel einer nicht gattungsgemäßen Kette zur Zugkraftübertragung ist in DE2141709A1 gezeigt. Diese Buchsenkette ist aus Seitenteilen aufgebaut, die durch Gelenkbolzen in Längsrichtung und in Querrichtung verbunden sind. Um eine Belastung der Gelenkbolzen zu reduzieren, haken die in Längsrichtung aneinander angrenzende Seitenteile in der gestreckten Stellung ineinander, um ein Teil der Zugkraft aufzunehmen. Die Ketten aus DE1281350B bzw. DE2141709A1 können aber den gewünschten Radius im abgewinkelten Zustand nicht vorgeben, da sie keine Anschlagflächen in Bogenstellung haben, weil sie nicht zur Leitungsschutzführung bestimmt ist.

Eine Leitungsführungsvorrichtung mit gattungsgemäßen Stützketten wurde z.B. in DE 10 2010 053 317 A1 und in DE 10 2011 015 119 A1 vorgeschlagen. Eine gattungsgemäße Stützkette dieser Art hat eine Vielzahl einzelner Kettenglieder, die gelenkig miteinander verbunden sind, jeweils mit in Längsrichtung der Kette bzw. des einzelnen Glieds jeweils einem ersten Längsabschnitt und einem dazu komplementären zweiten Längsabschnitt. Der zweite Längsabschnitt kann dabei - ähnlich einer Gabellasche - zweiarmig gegabelt bzw. gabelartig sein, mit zwei Seitenteilen und dazwischen einem Freiraum, in welchen der erste Längsabschnitt des folgenden Kettenglieds eingeführt und zumindest gegen seitliche Querbewegung gehalten ist. Beide Längsabschnitte sind in geeigneter Weise gestaltet, um die Kettenglieder in vorbestimmter Weise gelenkig miteinander zu verbinden, insbesondere so, dass eine vorgegebene Geometrie des Umlenkbogens eingehalten wird. Der Umlenkbogen ist typisch um eine quer zur Längsrichtung verlaufende Umlenkachse näherungsweise U-förmig gebogen, d.h. mit einer Umlenkachse parallel zur Breitenrichtung.

Anhand solcher Stützketten wird insbesondere sichergestellt, dass ein bestimmter Radius im Umlenkbogen eingehalten wird, d.h. die Leitungen werden gegen Abknicken geschützt. Zudem wird die nutzbare Länge vergrößert, indem die Stützketten größere freitragende Längen, meist des Obertrums ermöglichen. Damit eine solche Stützkette anstelle einer Leitung in der Umhüllung eingesetzt werden kann, hat sie typisch - insbesondere im Vergleich zu gängigen Energieketten - sehr kompakte Abmessungen zumindest im Querschnitt. Eine gattungsgemäße Stützkette selbst besitzt hingegen keinen Aufnahmekanal für Leitungen.

Je nach Beladungsgewicht werden z.B. zwei Stützketten seitlich außen in einer Umhüllung eingesetzt. Bekannt sind auch mehrlagige Aufbauten, wie in DE 10 2012 100 359 A1 vorgeschlagen, bei welchen mehr als zwei Stützketten in der Umhüllung einer stützenden Lage eingesetzt werden, bis hin zu Lagen ganz ohne Leitung, d.h. mit nur Stützketten in der Umhüllung einer Lage.

In der Praxis hat sich gezeigt, dass bei vielen Anwendungen die Stützketten verschleißanfälliger sind als die geführten Leitungen. Somit müssen die Stützketten vergleichsweise früher ausgetauscht werden. In der Regel erfolgt dabei ein Austausch des kompletten Pakets mit allen Umhüllungen inklusive allen darin geführten Leitungen und Stützketten, zumindest jedoch aller Lagen mit Stützketten und zugehörigen Leitungen. Aus praktischen Gründen, insbesondere wegen Reinraumanforderungen, ist ein Austausch einzelner Stützketten vor Ort meist unerwünscht. Dies bedeutet jedoch, dass Leitungen deutlich vor Erreichen ihrer möglichen Lebensdauer d.h. verfrüht ausgetauscht werden und entsprechend unnötige Kosten entstehen. Auch die Wartungsintervalle sind insoweit theoretisch unnötig kurz.

Ein Kernziel der vorliegenden Erfindung ist es mithin, die Gestaltung der Stützkette gegenüber dem vorbekannten Stand der Technik zu optimieren, insbesondere dahingehend, dass eine höhere Lebensdauer der Stützkette erreicht werden kann. Dabei soll jedoch die bestimmungsgemäß im Querschnitt besonders kompakte Bauweise der Stützkette nicht oder höchstens unwesentlich vergrößert werden.

Hierzu werden nachfolgend mehrere Erfindungsaspekte vorgeschlagen, die voneinander unabhängig als erfindungserheblich bzw. als eigenständige Erfindungen anzusehen sind. Die einzelnen Gestaltungsaspekte können jedoch besonders vorteilhaft miteinander kombiniert werden.

Die nachfolgend verwendeten Begriffe "Innenseite" und "Außenseite" sowie "innenseitig" und "außenseitig" sind vorliegend auf den Umlenkbogen bezogen, d.h. innen meint in diesen Begriffen radial innen bzw. der Umlenkachse zugewandt und außen meint radial außen bzw. der Umlenkachse abgewandt. Die Begriffe "vorne" und "hinten" sind auf zwei Längsenden des einzelnen Kettenglieds bezogen und dienen lediglich als Abkürzung, ohne Aussage über Funktion und Aufbau, da die Stützkette grundsätzlich immer in zwei Richtungen hin- und her verfahrbar ist.

### ERSTER ASPEKT

Gemäß einem unabhängigen ersten Aspekt wird bei einer gattungsgemäßen Stützkette nach Anspruch 1 eine Lösung zur Optimierung der Kraftübertragung, insbesondere in der gestreckten Lage, vorgeschlagen.

Eine Optimierung der Kraftübertragung wird gemäß dem ersten Aspekt bereits dadurch erreicht, dass der vordere erste Längsabschnitt in einem Endbereich einen an der Innenseite und quer zur Längsrichtung vorstehenden Vorsprung aufweist und dass der hintere zweite Längsabschnitt an seiner bzgl. des Umlenkbogens innenliegenden Seite (kurz: Innenseite) eine die Seitenteile verbindende, innenseitige Querbrücke mit einer Streckanschlagfläche für die Strecklage sowie eine daran in Längsrichtung vorderseitig angrenzende Ausnehmung aufweist. Dies ermöglicht es, in gestreckter Stellung von zwei verbundenen Kettengliedern den Vorsprung des einen Kettenglieds in die Ausnehmung des nächsten bzw. verbundenen Kettenglieds und dabei auch vorderseitig an die innenseitige Querbrücke des anderen Kettenglieds greifen zu lassen.

Durch ein derartiges Hintergreifen der Querbrücke bzw. Eingreifen des einen Kettenglieds in das nächste nach dem Kerngedanken des ersten Aspekts, insbesondere an der Querbrücke, welche die Seitenteile verbindet, wird insgesamt eine günstigere Krafteinleitung erzielt.

In Bezug auf die in Strecklage der Stützkette auftretenden Kräfte, die von dem einen Kettenglied in das andere übertragen werden, insbesondere durch das Leitungsgewicht bzw. der bestimmungsgemäßen Traglast auf der Stützkette, können zwei Effekte erzielt werden.

Einerseits entsteht nach dem ersten Aspekt eine günstigere Krafteinleitung dank des Vorsprungs der vorderseitig an der Querbrücke am anderen Kettenglied angreift (ähnlich eines Hintergriffs) dadurch, dass ein Teil der ansonsten entstehenden Flächenpressung auf die Streckanschlagfläche in eine Zugkraft umgeleitet wird, mit welcher der Vorsprung in Längsrichtung auf die Querbrücke einwirkt. Bei ansonsten gleichen Randbedingungen, einer kompakten Bauhöhe im Vergleich zur Baulänge insbesondere auch der Querbrücke, können dadurch größere freitragende Längen erzielt werden. Dies bedeutet jedoch auch, dass bei gleicher freitragender Länge des maximal ausgefahrenen Trums, eine insgesamt höhere Lebensdauer der Stützkette erzielt werden kann. Diese Wirkung ist besonders vorteilhaft, bei Kettengliedern die aus einem bei nominalen Lasten geringfügig verformbaren Material, insbesondere aus Kunststoff herstellt sind.

Andererseits können - in Bezug auf die Gelenkverbindung von zwei verbundenen Kettengliedern - nach dem ersten Aspekt auch Zugkräfte ohne übermäßige Belastung der Gelenkverbindung von einem Kettenglied auf das nächste übertragen werden. In der Praxis können die Gelenkverbindungen die Schwachstelle der Stützkette bilden, welche zuerst versagt. In Synergie mit dem erstgenannten Effekt kann so die Lebensdauer weiter gesteigert werden.

Weiterhin erlaubt die Zusammenwirkung von Vorsprung und Querbrücke mit deren zugeordneter Ausnehmung ggf. auch eine günstigere Hebelwirkung in der Kraftübertragung. Durch die günstigere Krafteinleitung in der Strecklage kann bei gleichbleibend kompakter Bauweise, d.h. mit einem Querschnitt kleiner gleich dem eines Aufnahmekanals einer herkömmlichen Umhüllung, eine spürbare Vergrößerung der freitragenden Länge bzw. Lebensdauer der Stützkette erzielt werden und/oder die Tragfähigkeit erhöht werden, sodass für eine bestimmte Anwendung insgesamt weniger Stützketten erforderlich sind.

In einer Ausgestaltung des ersten Aspekts kann der erste Längsabschnitt mit seinem Vorsprung am korrespondierenden zweiten Längsabschnitt des nächsten Kettenglieds einhaken, insbesondere in Art eines Hakens oder einer Sperrklinke oder dergleichen. Der Vorsprung kann in der Ausnehmung des zweiten Längsabschnitts einhaken bzw. die Querbrücke soz. hintergreifen. Das Hintergreifen beim Übergang von der gebogenen in die gestreckte Stellung soll dabei möglichst verschleißarm d.h. ohne unerwünschten Abrieb erfolgen. Ein Verrasten des Vorsprungs am anderen Kettenglied ist meist nicht nötig bzw. eher unerwünscht.

In der Stützkette sind die Kettenglieder zu einem Strang verbunden und sollten zumindest über den gewünschten Längsabschnitt, der freitragen soll, die vorgeschlagene Bauweise aufweisen. Zur Verwendung von Gleichteilen besteht die Stützkette vorzugsweise ausschließlich aus derartigen bzw. baugleichen Kettengliedern.

Besonders bevorzugt hat der zweite Längsabschnitt an der im Umlenkbogen äußeren Seite, d.h. seiner Außenseite und in seinem hinteren Endbereich einen Queranschlag welcher der Außenseite des ersten Längsabschnitts eines angrenzenden Kettenglieds als Widerlager für die Strecklage gegenüberliegt. Ein solches Widerlager ermöglich ein "Verkanten" des einen Längsabschnitts im anderen. Durch ein entsprechendes Widerlager kann unter Ausnutzung lastbedingter Verformung in Verbindung mit dem Vorsprung eine teilweise bis hin zu vollständige Entlastung der gelenkbildenden Bereiche in Strecklage erzielt werden.

Der äußere Queranschlag am hinteren Bereich kann dabei insbesondere als eine die Seitenteile verbindende außenseitige Querbrücke gestaltet sein. Hierdurch wird ein robustes Widerlager bereitgestellt bzw. das Kettenglied wird insgesamt stabiler bzw. steifer.

Die Kettenglieder haben bevorzugt eine Gestaltung mit einem vorderen bzw. ersten und einem hinteren bzw. zweiten Längsabschnitt die zueinander komplementär gestaltet sind, sodass der vordere Längsabschnitt eines Kettenglieds mit dem hinteren Längsabschnitt des nächsten Kettenglieds verbunden werden kann, insbesondere gelenkig verbunden werden kann. Dabei ist zumindest ein Teil des vorderen Längsabschnitts eines Kettenglieds im Freiraum des hinteren Längsabschnitts des nächsten Kettenglieds beweglich gelagert.

Eine gelenkige Verbindung ist vorliegend allgemein zu verstehen als eine Verbindung, welche das relative Schwenken von zwei Kettengliedern zueinander ermöglicht. Dabei liegt eine einwertige, lose Gelenkverbindung (Loslager) im Rahmen der Erfindung.

In bevorzugter Ausführungsform, insbesondere des ersten Aspekts, kann der Vorsprung eine Anlagefläche bilden, die zur Anlage an einem stirnseitigen vorderen Bereich der innenseitigen Querbrücke dient und hierzu im Wesentlichen senkrecht zur Längsrichtung der Stützkette bzw. des einzelnen Kettenglieds angeordnet ist. Über eine senkrecht zur Längsrichtung, d.h. auch zur Zugkraftrichtung, ausgerichtete Anlagefläche kann die Krafteinleitung besonders günstig, insbesondere verschleißarm und abriebarm erfolgen. Mit einer senkrecht zur Längsrichtung stehenden Anlagefläche kann ein spürbarer Anteil der durch Gewichtslast in Strecklage auftretenden Kräfte als Zugkraft auf die Querbrücke eingeleitet werden, sodass eine günstigere Belastung des Bauteils entsteht. Dies ist insbesondere vorteilhaft, wenn die Querbrücke eine flache Dimensionierung hat, mit einer Abmessung in Längsrichtung deutlich größer als der Bauhöhe im Querschnitt senkrecht zur Längsrichtung, d.h. in Verbindung mit kompakt bauenden Kettengliedern. Es ist jedoch auch denkbar, die kraftübertragenden Flächen von Vorsprung und Querbrücke bezüglich der Längs- und Höhenrichtung der Kettenglieder zumindest leicht schräg anzuordnen oder gerundet zu gestalten, z.B. zur Optimierung von Abriebkanten.

In einer praktischen Ausführungsform kann vorgesehen sein, dass der erste Längsabschnitt im Wesentlichen nasenförmig gestaltet ist und dabei ein zur Innenseite (zur Achse des Umlenkbogens) gekröpftes bzw. vorragendes vorderes Ende aufweist. An diesem Ende kann der Vorsprung nach dem ersten Aspekt ausgebildet sein. Bei dieser Gestaltung kann vorgesehen sein, dass der erste Längsabschnitt an seiner Innenseite, beispielsweise im mittleren Bereich, weiterhin einen Rücksprung bildet, in welchem die innenseitige Querbrücke des benachbarten Kettenglieds in Strecklage teilweise eintauchen oder vollständig aufgenommen werden kann. Dies ermöglicht eine relativ schlanke Gestaltung, insbesondere mit geringer Bauhöhe der Kettenglieder.

Der erste und zweite Längsabschnitt weisen typisch Streckanschlagflächen auf, d.h. Flächen die in Strecklage der Kettenglieder paarweise zusammenwirken und im Wesentlichen parallel zur Längsrichtung liegen. Vorzugsweise haben dabei der Vorsprung und die innenseitige Querbrücke zusammenwirkende Anlageflächen, die im Wesentlichen senkrecht zu den Streckanschlagflächen liegen. Die Anlageflächen können dabei so angeordnet sein, dass der Vorsprung eines Kettenglieds, in gestreckter Stellung, mit seiner Anlagefläche möglichst flächig an der Anlagefläche der innenseitigen Querbrücke des folgenden Kettenglieds kraftübertragend anliegt bzw. angreift. Auch hierdurch entstehen günstige Verhältnisse für die Kraftübertragung bzw. Krafteinleitung mit einer Kraftkomponente in Kettenlängsrichtung.

Insbesondere hinsichtlich des ersten Erfindungsaspekts ist es vorteilhaft, wenn der Vorsprung und insbesondere dessen Anlagefläche sich über die Gesamtbreite des ersten Längsabschnitts erstreckt (betrachtet im Querschnitt senkrecht zur Längsrichtung). Weiterhin kann in vorteilhafter Dimensionierung, der Vorsprung und insbesondere dessen Anlagefläche mit einem Überstand von mindestens 5 %, vorzugsweise von mindestens 10 %, der gesamten Bauhöhe des Kettenglieds nach innen (zur Umlenkachse hin) vorstehen (betrachtet im Querschnitt senkrecht zur Längsrichtung). Durch vergleichsweise große Anlageflächen wird die Flächenpressung zwischen den aneinander anschlagenden Kettengliedern verringert.

Für besonders günstige Kraftübertragungsverhältnisse kann der Vorsprung im endseitigen vorderen Viertel des ersten Längsabschnitts angeordnet sein. Hierdurch kann eine Hebelwirkung (bzgl. der Gelenkachse), insbesondere in Verbindung mit einem Widerlager, weiter gesteigert werden bzw. besonders günstige Kraftverhältnisse in Streckklage können erzielt werden. Entsprechend ist die innenseitige Querbrücke vorzugsweise in der gegenüberliegenden bzw. abgewandten hinteren Hälfte des zweiten Längsabschnitts angeordnet. Die Ausnehmung liegt dabei in Längsrichtung zwischen der Querbrücke und dem endseitigen Vorsprung, d.h. näher am mittleren Bereich des Kettenglieds.

In bevorzugter Weiterbildung, insbesondere des ersten Aspekts, kann die Ausnehmung vorderseitig an der Querbücke einen Durchbruch zur Innenseite des Kettenglieds bilden, welcher insbesondere vom Freiraum zwischen den Seitenbereichen ausgehend nach außen mündet. So kann die volle Bauhöhe der Querbrücke als Anlagefläche für den zugkraftwirksamen Vorsprung genutzt werden.

Weiterhin kann vorgesehen sein, dass die Ausnehmung den Vorsprung in Strecklage im Wesentlichen vollständig aufnimmt. Dabei ist beispielsweise zur Stabilisierung in Querrichtung bzw. zur Stabilisierung in seitlicher Richtung auch ein formschlüssiges Aufnehmen des Vorsprungs in der Ausnehmung vorteilhaft.

Die Ausführungsformen gemäß dem ersten Aspekt sind eigenständig, jedoch mit den Merkmalen des nachfolgenden zweiten und/oder dritten Aspekts vorteilhaft kombinierbar.

### ZWEITER ASPEKT

Auch gemäß dem zweiten Aspekt wird die Konstruktion der Kettenglieder bezüglich Kraftübertragung bzw. Lebensdauer optimiert, jedoch insbesondere hinsichtlich der Anschläge in der bogenförmigen Stellung des Umlenkbogens. Bei den eingangs genannten Stützketten aus dem Stand der Technik werden die Kettenglieder in Richtung quer zur Längsrichtung, bezogen auf den Umlenkbogen von außen nach innen zusammengesteckt. Konstruktionsbedingt ermöglichen diese gabelartigen Kettenglieder daher eine Stabilisierung der laschenartigen Seitenbereiche lediglich an einer Seite, entweder radial innen oder radial außen in Bezug auf den Umlenkbogen.

Hiervon ausgehend, schlägt der zweite Aspekt der Erfindung eine insgesamt robustere Gestaltung der Kettenglieder vor. Dazu wird gemäß dem Kerngedanken nach dem unabhängigen zweiten Erfindungsaspekt bei einer gattungsgemäßen Stützkette nach dem Oberbegriff aus Anspruch 9 vorgeschlagen, dass jedes Kettenglied in seinem zweiten Längsabschnitt an seiner Außenseite (im Umlenkbogen radial außen) eine außenseitige Querverbindung zusätzlich zu einer bzw. der an der Innenseite vorgesehenen innenseitigen Querverbindung aufweist.

Die Querverbindungen können insbesondere als Quersteg und/oder Querbrücke ausgeführt sein und sind beide bevorzugt plattenartig bzw. mit deutlich geringerer Bauhöhe im Vergleich zur Baulänge in Längsrichtung ausgeführt.

Die Querverbindungen überbrücken den Freiraum zwischen den Seitenbereichen und verbinden diese stabilisierend. Diese Gestaltung ermöglicht es, dass die innenseitige Querbrücke Strecklage mit einer innenseitigen Streckanschlagfläche des ersten Längsabschnitts zusammenwirkt und ermöglicht darüber hinaus ein Zusammenwirken des außenseitigen Querstegs mit einer außenseitigen Bogenanschlagfläche des ersten Längsabschnitts, nämlich in der bogenförmigen bzw. umgelenkten Stellung im Umlenkbogen. Durch die beidseitigen Stege bzw. Brücken kann somit auch die Kraftübertragung zwischen Kettengliedern bzw. Krafteinleitung in der bogenförmigen Stellung (im Umlenkbogen) verbessert werden, unabhängig davon, ob ein Vorsprung nach dem ersten Aspekt eingesetzt wird.

Die Begriffe Streckanschlagfläche bzw. Bogenanschlagfläche bezeichnen hierbei Anschlagflächen nach ihrer Primärfunktion (d.h. nicht nach ihrer Formgebung), nämlich als in Strecklage bzw. im Umlenkbogen wirksam.

Kettenglieder mit zwei gegenüberliegenden laschenartigen Seitenbereichen, die ähnlich Gabellaschen wirken, bieten bereits eine gewisse Stabilität gegen seitliches Auslenken der Stützkette. Die nach dem zweiten Aspekt vorgeschlagene Verstärkung dieser Seitenbereiche mit zwei gegenüberliegenden Querverbindungen, wie einem Quersteg und einer Querbrücke, bietet eine gesteigerte Stabilität der Kettenglieder gegen unterschiedliche Verformungen und insbesondere auch eine deutlich höhere Seitenstabilität im Betrieb der Stützkette. Dies kann insbesondere bei hinsichtlich Außenabmessungen gleichbleibend kompakter Bauweise im Querschnitt erreicht werden, z.B. mit Höhe x Breite ≤ 50mm × 50mm, insbesondere ≤ 25mm × 25mm, wobei der Querschnitt nicht quadratisch sein muss.

Zudem kann mittels einer Bogenanschlagfläche nach dem zweiten Aspekt der Abrieb bzw. Verschleiß im Vergleich zu bekannten Bauweisen des Bogenanschlags, d.h. mit vergleichsweise schmalen Anschlägen an den Stirnflächen, verringert werden.

Eine Querbrücke kann in Längsrichtung beidseitig bzw. vorne und hinten durch Aussparungen bzw. Öffnungen begrenzt sein. Ein Quersteg hingegen kann bevorzugt einseitig, insbesondere vorderseitig bzw. zum ersten Längsabschnitt hin, in den Rumpf bzw. Körper des Kettenglieds übergehen bzw. an diesem angeformt sein. Der Rumpf bzw. Körper des Kettenglieds kann dabei z.B. als Vollkörper bzw. monolithisch ausgeführt sein, und ist vorzugsweise in sich stabiler als die Seitenbereiche.

Bevorzugt wird bezogen auf den Umlenkbogen außen ein Quersteg vorgesehen und innen eine Querbrücke. Diese Bauweise lässt sich besonders vorteilhaft mit dem ersten Aspekt kombinieren.

Der Quersteg ist bevorzugt in einem vorderen Teil des zweiten Längsabschnitts, d.h. auf der Seite zum ersten Längsabschnitt hin, angeordnet. Bei bekannten Stützketten aus dem Stand der Technik, mit quer zur Längsrichtung zusammensteckbaren Kettengliedern, ist ein außenseitiger Quersteg nach dem zweiten Aspekt konstruktiv nicht möglich.

Dementsprechend sieht eine Weiterbildung, insbesondere nach dem zweiten Aspekt, vor, dass der erste Längsabschnitt in den zweiten Längsabschnitt eines zu verbindenden Kettenglieds in Längsrichtung einsteckbar ist, insbesondere in Richtung nach "vorne", zwecks Verbinden der Kettenglieder, z.B. auch zur gelenkigen Verbindung zwischen zwei Kettengliedern.

In bevorzugter Ausgestaltung des zweiten Aspekts kann jedes Kettenglied in seinem zweiten Längsabschnitt an der Außenseite zusätzlich zum Quersteg in einem vorderen Bereich, weiterhin auch eine außenseitige Querbrücke aufweisen. Eine solche zusätzliche Querbrücke ist dabei vorzugsweise in einem hinteren Bereich angeordnet. Das Kettenglied kann auch jeweils eine erste und eine zweite außenseitige Querbrücke umfassen, insbesondere anstelle eines Querstegs an der Außenseite.

Die zusätzliche Querbrücke wirkt ebenfalls verstärkend und ist bevorzugt im hinteren Endbereich des zweiten Längsabschnitts vorgesehen. Eine entsprechende Querbrücke außenseitig am hinteren Endbereich des zweiten Längsabschnitts ist zudem besonders vorteilhaft in Verbindung mit dem ersten Aspekt, nämlich als Widerlager für eine Krafteinleitung über den Vorsprung verwendbar (s. oben).

Ergänzend hierzu kann der erste Längsabschnitt an der Außenseite einen vorstehenden Bereich aufweisen, welcher in der bogenförmigen Stellung (im Umlenkbogen) außenseitig zwischen den Quersteg und die Querbrücke bzw. beide außenseitige Querbrücken, reicht bzw. greift. Diese Gestaltung ermöglicht es beispielsweise, dass der erste Längsabschnitt mit dem zweiten Längsabschnitt in bogenförmiger Stellung verkantet und dazu insbesondere mit einer Kante des vorstehenden Bereichs verklemmt. Dies kann insbesondere durch Angreifen an der weiteren bzw. hinteren außenseitigen Querbrücke erreicht werden. Hierdurch kann bei Belastung in Zugrichtung (eine Fahrtrichtung) in bogenförmiger Stellung u.a. ein unbeabsichtigtes Lösen der Kettenglieder, insbesondere bei vergleichsweise hohen Zugkräften, vermieden werden.

Für jeden der beschriebenen Aspekte ist es grundsätzlich vorteilhaft, wenn die komplementären Längsabschnitte aufeinanderfolgender Kettenglieder eine Rastverbindung bilden können, die ein Lösen in Längsrichtung bei bestimmungsgemäßen Zugkräften zuverlässig vermeidet.

Hierzu kann jedes Kettenglied jeweils in einem von beiden Längsabschnitten zwei gegenüberliegende und seitlich zur Längsrichtung vorragende Zapfen bzw. Rastzapfen aufweisen, wobei am korrespondierenden Längsabschnitt entsprechende Aussparungen vorgesehen sind, mit welchen die seitlichen Zapfen verrastbar sind. Die Zapfen sind vorteilhaft am ersten Längsabschnitt vorgesehen, sodass diese in Aussparungen an den Seitenteilen des zweiten Längsabschnitts eingreifen können, ohne dabei seitlich über die Seitenteile vorzustehen.

Zum Verbinden der Kettenglieder in Kettenlängsrichtung ist es vorteilhaft, wenn die Rastzapfen in Längsrichtung schräg zulaufende, insbesondere sich in der Längsrichtung von hinten nach vorne (bzw. in Einführrichtung) verjüngende Einführschrägen, aufweisen. Entsprechende Einführschrägen vereinfachen das Montieren der Kette durch ein einfaches Zusammenstecken der Kettenglieder in Kettenlängsrichtung.

Insbesondere bei stabilisierter Bauweise des zweiten Längsabschnitts mit gegenüberliegenden Querbrücken bzw. Querstegen ist es weiterhin vorteilhaft, wenn den Aussparungen die zum Verrasten mit den vorgenannten Rastzapfen vorgesehen sind, Einführnuten zugeordnet sind die in die Aussparungen einmünden. Dank solcher Einführnuten können die Zapfen in die Aussparungen leichter eingeführt werden. Für ein Zusammenstecken der Kettenglieder in Längsrichtung ist es vorteilhaft, wenn die Einführnuten sich im Wesentlichen in Längsrichtung erstrecken.

### DRITTER ASPEKT

Gemäß einem unabhängigen dritten Aspekt wird eine neuartige, optimierte Gestaltung der Gelenkverbindung zwischen den einzelnen Kettengliedern der Stützkette vorgeschlagen.

Bei einem gattungsgemäßen Kettenglied bzw. einer Stützkette mit einem vorderen Längsabschnitt und einem hinteren Längsabschnitt nach Anspruch 13, haben zwei Seitenbereiche des breiteren bzw. hinteren Längsabschnitts jeweils eine vordere Stirnfläche und eine hintere Stirnfläche, die bei angrenzenden Kettengliedern einander gegenüberliegen.

Bei einer solchen Gestaltung wird gemäß dem Kerngedanken des unabhängigen dritten Aspekts vorgeschlagen, dass die vordere Stirnfläche einen Gelenkbereich bildet und die hintere Stirnfläche einen komplementären Gelenkbereich bildet, wobei die Gelenkbereiche je nach Lastfall, insbesondere zumindest bei Schubbelastung (in einer Bewegungsrichtung, hier nach "vorne") zusammenwirken, um eine gewünschte Gelenkverbindung zwischen beiden Kettengliedern zu realisieren. Dabei wirken die jeweiligen Gelenkbereiche der vorderen Stirnfläche eines Kettenglieds und der hinteren Stirnfläche eines angrenzenden bzw. nächsten Kettenglieds zusammen.

Dies eröffnet gegenüber herkömmlichen Gelenkzapfen und Gelenkaufnahmen zur schwenkbaren Verbindung von Kettengliedern neue, optimierte Gestaltungsmöglichkeiten und insbesondere günstigere Kraftübertragungsverhältnisse bzw. eine höhere Lebensdauer der Gelenkverbindung. Durch diese Gestaltung wird einerseits erreicht, dass die vordere Stirnfläche des einen Kettenglieds an der hinteren Stirnfläche des angrenzenden anderen Kettenglieds zur Schubkraftübertragung anliegen kann. Andererseits können dabei zugleich die Stirnbereiche der Seitenteile selbst als Gelenkbereiche zur gelenkigen Verbindung von zwei Kettengliedern genutzt werden, sodass die übliche und verschleißanfällige Gelenkverbindung mit Gelenkbolzen-/aufnahme entfallen kann. Die Stirnflächen bieten ein vergleichsweise großes Flächenmaß zur Gestaltung, sodass die Flächenpressung bei Schubkrafteinleitung verringert bzw. die Dauerbeständigkeit des Gelenks erhöht werden kann.

Die Gelenkbereiche können dabei in Art eines Loslagers bzw. eines einwertigen Lagers ausgeführt sein, welches nur in Richtung der Schubkraftbelastung ein definiertes Lager bildet bzw. Kraft überträgt, insbesondere nur bei Schubbelastung der Stützkette eine Schwenkachse bzw. Drehachse zum Verschwenken beider Kettenglieder definiert. Die Gelenkbereiche können als Gleitpaarung insbesondere ein einwertiges Kipplager bilden, wobei z.B. die Gelenkbereiche der vorderen Stirnflächen des einen Kettenglieds als konvexes Druckstück, z.B. mit Oberflächen in Form vom Zylinderabschnitten, und die hinteren Stirnflächen des anderen Kettenglieds als zusammenwirkende konkave Kippauflage mit komplementärer Oberfläche ausgeführt sein können.

Vorzugsweise übertragen die Gelenkbereiche im wesentlichen keine Zugkräfte im Betrieb der Stützkette.

Eine Gelenkverbindung in Art eines Loslagers ist an sich langlebiger und besonders vorteilhaft mit dem ersten Aspekt kombinierbar. Sie erlaubt eine Relativverschiebung in Höhenrichtung bzw. eine Verlagerung des Drehpunkts, insbesondere unter Gewichtslast in Strecklage, um die günstigere Krafteinleitung nach dem ersten Aspekt zu optimieren.

Bei einer Gelenkverbindung anhand der Stirnflächen kann der erste Längsabschnitt des einen Kettenglieds im komplementären zweiten Längsabschnitt des nächsten Kettenglieds in Längsrichtung ggf. mit einem gewissen Spiel in Längsrichtung gehalten, insbesondere verrastet gehalten sein. Der dritte Aspekt ermöglicht eine Gestaltung der Gelenkverbindung unabhängig von der Verbindung zur Übertragung von Zugkraft, z.B. durch Rastverbindung und/oder ein hakenförmiges Eingreifen nach dem ersten Aspekt.

Gemäß dem unabhängigen Kerngedanken des dritten Aspekts wird somit vorgeschlagen, dass die in einem Längsabschnitt ohnehin vorhandenen, meist laschenartigen Seitenbereiche an ihren Stirnflächen die Gelenkverbindung bereitstellen bzw. Teile der Stirnflächen integrale Bestandteile der Gelenkverbindung bilden.

Dieser dritte Erfindungsaspekt erlaubt es beispielsweise, Gelenkverbindungen mit vergleichsweise geringem Abrieb des als Drehlager dienenden Bereichs bereitzustellen, ohne nennenswerten zusätzlichen Materialaufwand und ohne das Verbinden der Gelenkverbindung beim Verrasten der Kettenglieder zu erschweren. Weiterhin ermöglicht diese Gestaltung eine vergleichsweise kleinere bzw. in Längsrichtung kürzere Kettenteilung der Stützkette im Vergleich zum Stand der Technik, und somit u.a. auch kleinere Biegeradien des Umlenkbogens bzw. geringere Bauhöhen der Leitungsführung insgesamt.

In einer besonderen Ausführungsform des dritten Aspekts ist die vordere Stirnfläche konvex geformt und die hintere Stirnfläche entsprechend bzw. konjugiert konkav geformt, je in einer Ebene parallel zur Verfahrebene betrachtet (in Seitenansicht des Kettenglieds).

Die Gelenkbereiche an den Stirnflächen sind bevorzugt für eine schwenkbare Gelenkverbindung ausgeführt, die bei Schubbelastung einen definierten Drehpunkt (Drehgelenk oder Kippgelenk) vorgibt, zwecks schwenken in die gebogene Relativstellung des Umlenkbogens. Die Schwenkachse liegt dabei, wie üblich, bevorzugt senkrecht zur Längsrichtung und zur Bewegungsebene der Stützkette.

Auch ein Abrollen der Gelenkbereiche aufeinander ist jedoch denkbar. Die Gelenkbereiche der Stirnflächen können für eine Drehgelenkverbindung oder ein Scharniergelenk, beispielsweise in Art einer Gelenkkopf-Gelenkpfanne-Verbindung, ausgeführt sein. Bevorzugt ist hingegen eine Gestaltung als einwertiges Loslager.

Besonders bevorzugt bilden die vordere und die hintere Stirnfläche in Höhenrichtung vorzugsweise beidseitig an den Gelenkbereich angrenzend jeweils eine Anlagefläche, nämlich eine zur Innenseite für die bogenförmige Stellung (BogenAnlagefläche) und eine zur Außenseite für die gestreckte Stellung (StreckAnlagefläche). Es ist auch bereits vorteilhaft nur einseitig zum Gelenkbereich eine anschlagwirksame Fläche, insbesondere eine StreckAnlagefläche, an den gegenüberliegenden Stirnseiten vorzusehen.

In einer bevorzugten Ausführungsform bildet jede der Stirnflächen in Höhenrichtung unterteilt drei Funktionsbereiche: eine Streckanlagefläche, den Gelenkbereich und eine Bogenanlagefläche. Die Streckanlagefläche einer vorderen Stirnfläche wirkt mit der Streckanlagefläche einer hinteren Stirnfläche in Strecklage, insbesondere im freitragenden Trum, zusammen. Die Bogenanlagefläche einer vorderen Stirnfläche wirkt mit der Bogenanlagefläche einer hinteren Stirnfläche im Umlenkbogen (bogenförmige Stellung) zusammen. Entsprechend sind die gegenüberliegenden Streckanlageflächen und die gegenüberliegenden Bogenanlageflächen der Stirnflächen konjugiert zueinander geformt.

Dabei können die Anlageflächen der Stirnflächen vorzugsweise in Seitenansicht gekrümmt verlaufende Anlageflächen sein, wodurch u.a. die Geräuschentwicklung verringert wird. Sie können beispielsweise jeweils kreisbogenförmig verlaufen mit einem vergleichsweise großen Radius, z.B. >50% der Kettenteilung bzw. um ein Vielfaches grösser als die Bauhöhe des Kettenglieds. Der Radius beider Kreisbogenformen kann identisch sein, wobei die Mittelpunkte auseinanderfallen.

Der konvexe und der konkave Gelenkbereich können z.B. als kreiszylindrische Oberflächen mit vergleichsweise geringem Radius, insbesondere < 33% der Bauhöhe des Kettenglieds ausgeführt sein. Alternativ erlaubt der dritte Aspekt auch Gestaltungen mit Großen Radien, welche mit üblichen Bolzen-/Aufnahme-Gelenkverbindungen nicht realisiert werden können.

Insbesondere beim dritten Aspekt ist es ebenfalls vorteilhaft, wenn die Kettenglieder durch Zusammenstecken in Längsrichtung miteinander verbunden werden. Dies kann erreicht werden, indem der erste Längsabschnitt in Längsrichtung in den komplementären zweiten Längsabschnitt eines zu verbindenden Kettenglieds einstreckbar ist, insbesondere in Längsrichtung, wobei die Längsabschnitte vorzugsweise zur Bildung einer Rastverbindung gegen Lösung in Längsrichtung ausgeführt sind.

In einer bevorzugten Ausführungsform zum Verrasten, insbesondere i.V.m. dem dritten Aspekt, können spezielle Rastzapfen vorgesehen sein, welche nicht als eigentliche Gelenkzapfen dienen. Hierzu können in dem einen Abschnitt dementsprechend zwei gegenüberliegende und seitlich zur Längsrichtung vorstehende Zapfen vorgesehen sein, welche jedoch bevorzugt eine besondere Formgebung für eine spezielle Aufnahme aufweisen. Die seitlich vorstehenden Zapfen sind mit einer entsprechenden Aussparung im anderen Längsabschnitt verrastbar. Besonders bevorzugt ist dabei eine Gestaltung, bei welcher die Aussparungen in einer Längsebene (entsprechend der Bewegungsebene der Stützkette) kreisbogenförmig verlaufen. Hierbei entspricht die Kreisbogenform der gewünschten Gelenkverbindung, insbesondere durch die Stirnflächen der Seitenbereiche nach dem dritten Aspekt. Der Mittelpunkt des Kreisbogens sollte dem nominalen Drehpunkt der Gelenkverbindung entsprechen und das Bogenmaß mindestens dem gewünschten Schwenkwinkel, vorzugsweise mit Spiel für eine relative Höhenverschiebung beider Kettenglieder.

Die Aussparungen für die Zapfen sind bevorzugt in den Seitenbereichen vorgesehen, insbesondere an der dem innenliegenden Freiraum zugewandten inneren Fläche. Die zur Rastverbindung genutzten Zapfen können in den entsprechenden kreisbogenförmigen Aufnahmen einrasten. Die Aufnahmen können als durchgehende Öffnungen oder z.B. als Innennuten in den Seitenbereichen eingeformt sein.

In allen Aspekten kann der zweiarmige Längsabschnitt mit den zwei Seitenbereichen gegabelt, gabelartig oder allgemein ähnlich einer Gabellasche ausgeführt sein. Der bevorzugt zungenartige erste Längsabschnitt kann dabei ein männliches Koppelstück darstellen, das im Freiraum des als komplementären weiblichen Koppelstücks aufgenommen und gehalten wird. Grundsätzlich ist der Freiraum dabei so dimensioniert, dass zumindest der vordere Teil, insbesondere ein überwiegender Teil des ersten Längsabschnitts eines verbundenen Kettenglieds hierin in der Längsebene der Kette gegenüber verschwenkbar beweglich ist. Zwischen den Endbereichen der Längsabschnitte kann ein mittlerer, vergleichsweise robuster Mittenabschnitt in Art eines Rumpfes vorgesehen sein, der als Teil des zweiten Längsabschnitts betrachtet werden kann.

Das Kettenglied für die Stützkette ist bei allen Aspekten vorzugsweise einstückig aus Kunststoff hergestellt, insbesondere im Spritzgussverfahren. Hierzu können insbesondere faserverstärkte Thermoplaste oder andere geeignete Polymere eingesetzt werden. Alle Kettenglieder sind vorzugsweise baugleich bzw. mit identischer Geometrie ausgeführt.

Mit den Gestaltungen nach einem oder mehreren der vorstehenden Aspekte lässt sich jeweils unabhängig voneinander eine spürbare Verbesserung der Stützkette, insbesondere hinsichtlich ihrer Lebensdauer insgesamt erzielen.

Auf die Bauweise der Umhüllung kommt es grundsätzlich nicht an, diese sollte für Reinraumanwendungen jedoch die darin geführten Leitungen und auch die bedarfsweise aufgenommenen Stützketten in Umfangsrichtung geschlossen und staubdicht bzw. schützend gegen Austritt von Abriebpartikeln umgeben. Die Vorrichtung kann ggf. mehrere Lagen derartiger Umhüllungen aufweisen, wobei zumindest eine Stützkette in einer Umhüllung aufgenommen ist.

Weitere Einzelheiten und Vorteile der einzelnen Erfindungsaspekte lassen sich, ohne Beschränkung der Allgemeinheit des Vorstehenden, der nachfolgenden Erläuterung bevorzugter Ausführungsbeispiele anhand der beigefügten Zeichnungen entnehmen. Merkmale mit entsprechender bzw. identischer Struktur oder Funktion haben entsprechende Bezugszeichen und werden ggf. nicht wiederholt beschrieben. Es zeigen:
**FIG.1****:** in Perspektivansicht eine Leitungsführungsvorrichtung für Reinraumanwendungen, hier mit zwei Umhüllungen, in einer rein beispielhaften Betriebsposition mit einem gestreckten freitragenden Obertrum, einem gestreckten ruhenden Untertrum und einem Umlenkbogen dazwischen;
**FIG.2****:** einen Querschnitt (senkrecht zur Längsrichtung) eines beispielhaften mehrlagigen Aufbaus mit einer Anzahl gestapelter Umhüllungen für eine Vielzahl Leitungen, wobei in Aufnahmekanälen einiger Umhüllungen Stützketten aufgenommen sind;
**FIG.3****:** Konstruktionsansichten eines einzelnen Kettenglieds für eine Stützkette nach einem ersten Ausführungsbeispiel in Seitenansicht (A), Untersicht (B), Draufsicht (C), Frontansicht (D) und Rückansicht (E);
**FIG.4A-4B****:** Perspektivansichten des Kettenglieds nach FIG.3;
**FIG.5A-5B****:** Längsschnitte durch die Mittelebene eine Teillänge einer Stützkette aus Kettengliedern nach FIG.3, in gestreckter Stellung (links in FIG.5A) und voll abgewinkelter bogenförmiger Stellung (rechts in FIG.5A) im Umlenkbogen sowie mit einer nur teilweise abgewinkelten Zwischenstellung zwischen zwei Kettengliedern (FIG.5B);
**FIG.6****:** einen Teillängsschnitt in bogenförmiger Stellung analog zu FIG.5A, in einem seitlich äußeren Bereich zur Darstellung der Rastverbindung und Gelenkverbindung zwischen Kettengliedern;
**FIG.7A****:** einen vergrößerten Längsschnitt der Verbindungsbereiche von zwei Kettenglieder in gestreckter Stellung analog zu FIG.5A zur Veranschaulichung der Krafteinleitung;
**FIG.7B****:** eine vergrößerte Seitenansicht der Verbindungsbereiche von zwei Kettenglieder in gestreckter Stellung zur Veranschaulichung einer bevorzugten einwertigen Gelenkverbindung; und
**FIG.8****:** Konstruktionsansichten eines einzelnen Kettenglieds nach einem zweiten Ausführungsbeispiel in Seitenansicht (A), Untersicht (B), Draufsicht (C), Frontansicht (D) und Rückansicht (E) .

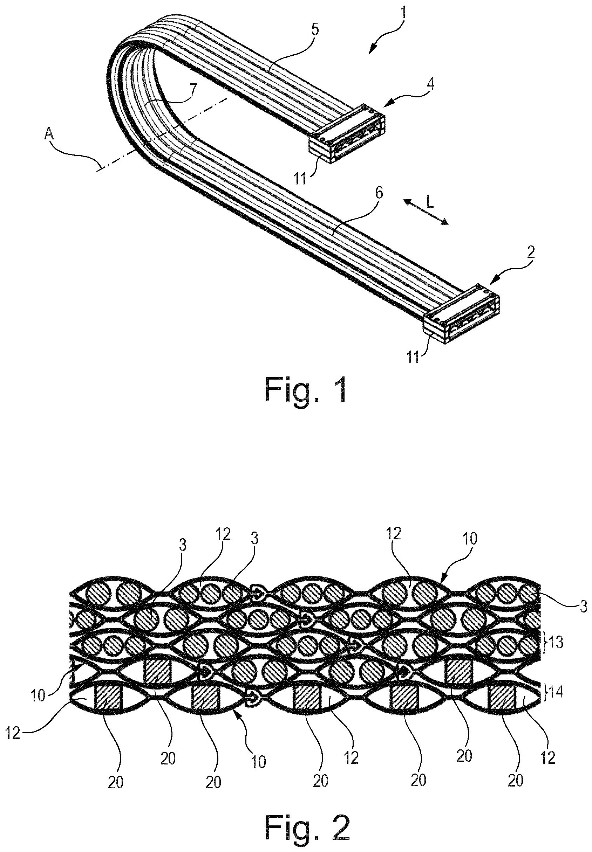

FIG.1 zeigt eine beispielhafte Leitungsführungsvorrichtung 1 die Versorgungsleitungen 3 (FIG.2) führt zwischen einer feststehenden Anschlussstelle 2 an einer Basis und einer beweglichen Anschlussstelle 4 an einem beweglichen Mitnehmer. Der Mitnehmer ist nicht näher gezeigt und typisch linear entlang der Längsrichtung L hin- und her fahrbar. Die Versorgungsleitungen 3 sind Kabel, Schläuche oder dgl. und versorgen den beweglichen Teil einer Maschine bspw. mit Strom, Signalen und/oder Betriebsmedien. FIG.1 zeigt eine Momentaufnahme der Leitungsführungsanordnung 1 mit einem freitragenden, gestreckten Obertrum 5, einem ggf. auf einer Auflage liegenden Untertrum 6 und einem Umlenkbogen 7. Der Umlenkbogen 7 hat einen vorgegebenen Biegeradius bzw. Umlenkradius um eine gedachte Umlenkachse A. Im Betrieb verfährt der Umlenkbogen 7 relativ zur feststehenden Anschlussstelle 2 hin- und her, wenn der Obertrum 1 mit der beweglichen Anschlussstelle 4 in Längsrichtung L hin- oder zurückfährt.

Die Leitungsführungsvorrichtung 1 ist insbesondere für Reinräume oder andere Anwendungsgebiete, in welchen ein Freisetzen von Partikeln verringert bzw. vermieden werden soll, geeignet und bestimmt. Hierzu weist sie eine oder mehrere in Längsrichtung L erstreckte, flexible Umhüllungen 10 aus weichelastischem Kunststoff auf, welche die Versorgungsleitungen 3 entlang deren gesamten Länge zwischen den Anschlussstellen 2 und 4 staubdicht umschließen. Die Enden jeder Umhüllung 10 und der Leitungen 3 sind, z.B. mit Klemmvorrichtungen 11 bzw. Endanschlüssen, endseitig an den Anschlussstellen 2, 4 befestigt.

Gemäß FIG.2 hat jede Umhüllung 10 eine Anzahl rohrförmig ausgeprägter Aufnahmekanäle 12 zur Führung jeweils mindestens einer oder mehrerer Versorgungsleitungen 3. Jede Umhüllung 10 ist insgesamt schlauchartig und ausreichend flexibel, u.a. durch geeignete Gestaltung und/oder Materialwahl, um eine reversibel biegsame Krümmung des Umlenkbogens 7 mit geringem Kraftaufwand zu erlauben und der Bewegung in Längsrichtung L mit möglichst geringem Widerstand zu folgen.

Die Leitungsführungsvorrichtung 1 weist ferner eine Anzahl Stützketten 20 auf, die sich entlang der gesamten Länge der Leitungsführungsanordnung 1 von der Anschlussstelle 2 zur Anschlussstelle 4 erstrecken. In der rein beispielhaften Anordnung nach FIG.2 ist ein mehrlagiger Aufbau mit mehreren gestapelten Lagen 13 aus Umhüllungen 10 mit Leitungen 3 gezeigt. Dabei ist eine dem Umlenkbogen 7 zugewandte innere Stützlage 14 vorgesehen, bei welcher in allen Aufnahmekanäle 12 der Umhüllung(en) Stützketten 20 vorgesehen sind, d.h. diese innere Stützlage 14 führt keine Leitungen 3. Auch in weiteren Lagen 13 können, z.B. seitlich außen, zusätzliche Stützketten 20 zur Stabilisierung gegen Querkräfte in der/den Umhüllungen 10 angeordnet sein, vgl. FIG.2.

Eine Kernfunktion der Stützketten 20 besteht darin, den Krümmungsradius des Umlenkbogens 7 vorzugeben bzw. dessen minimalen Radius um die Umlenkachse A zu begrenzen. Eine weitere Kernfunktion jeder Stützkette 20 besteht darin, die freitragende Länge des Obertrums 5 zu stützen oder erst zu ermöglichen, insbesondere in der voll ausgefahrenen Position des Mitnehmers (nicht in FIG.1 gezeigt). Jede Stützkette 20 stützt dabei die Umhüllung 10, insbesondere gegen schwerkraftbedingtes Durchhängen bzw. wirkt lasttragend. Je nach Beladungsgewicht und Länge wird eine ausreichende Anzahl an Stützketten 20 vorgesehen.

Die Stützkette 20 ist als Gliederkette ausgeführt und wird anhand von zwei Ausführungsbeispielen der einzelnen Kettenglieder nachfolgend näher erläutert.

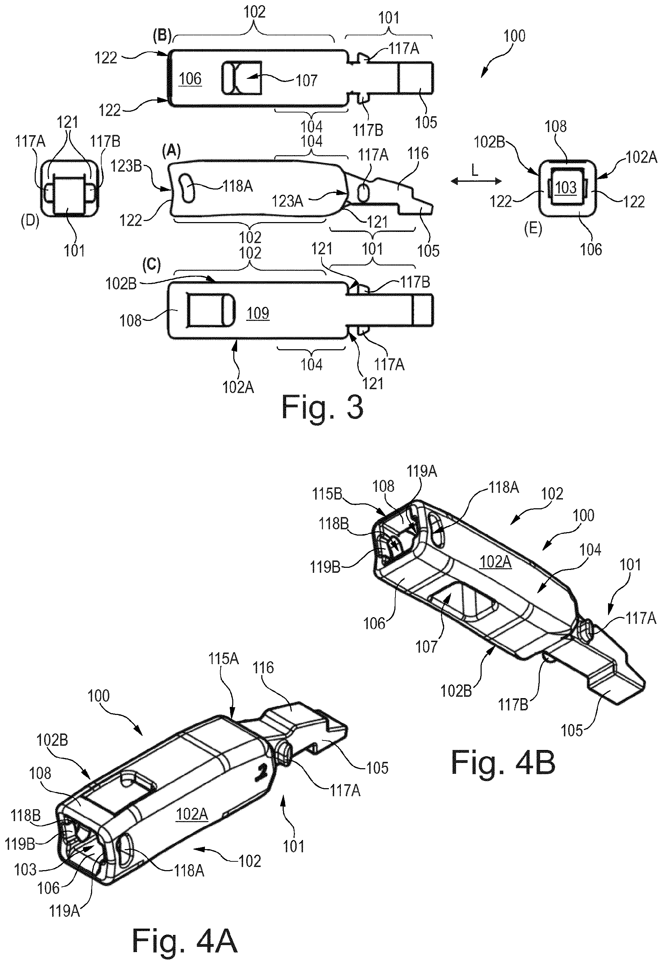

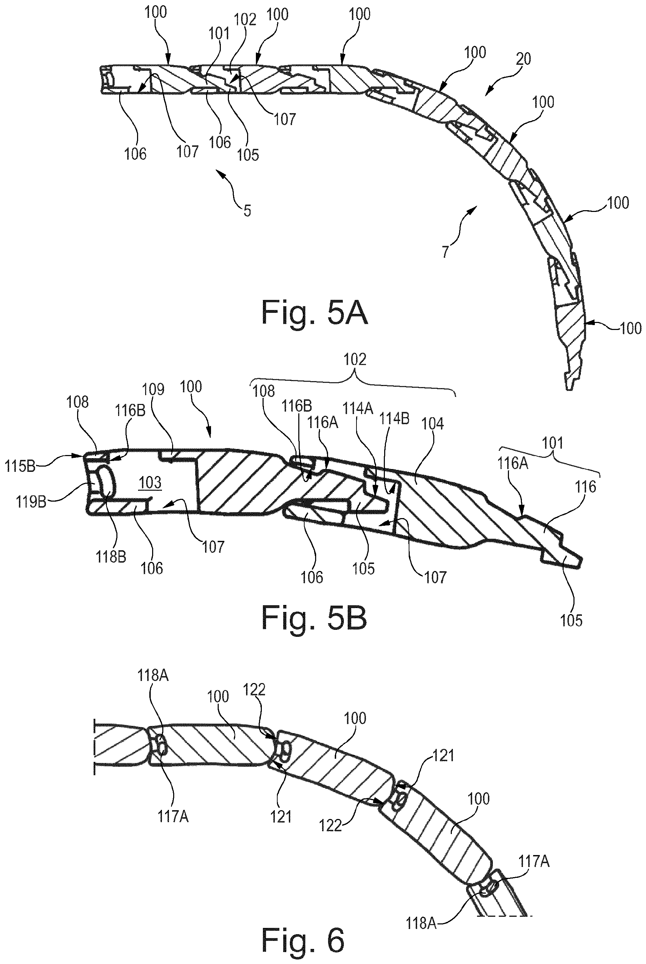

FIG.3-7 zeigen eine bevorzugte erste Ausführungsform eines Kettenglieds 100, welches alle drei Kernaspekte der Erfindung vereint. Das Kettenglied 100 hat, in Längsrichtung L gesehen, einen vorderen bzw. ersten Längsabschnitt 101 sowie einen dazu komplementär gestalteten hinteren bzw. zweiten Längsabschnitt 102. Das Kettenglied 100 hat ferner zwei Seitenteile 102A, 102B, die in Art von Gabelaschen gestaltet sind und dazwischen einem Freiraum 103 bilden. In den Freiraum 103 kann der als männlicher Verbinder ausgeführte erste Längsabschnitt 101 eines angrenzenden folgenden Kettenglieds 100 eingesteckt und weitgehend aufgenommen werden, vgl. FIG.5A-5B. Der zweite Längsabschnitt 102 bildet mit dem Freiraum 103 einen korrespondierenden weiblichen Verbinder. Jedes Kettenglied 100 ist ein einteiliges Spritzgussteil aus biegesteifem dauerfestem Kunststoff. Im Übergang zum kürzeren ersten Längsabschnitt 101 bildet der längere zweite Längsabschnitt 102 einen verstärkten Rumpfbereich 104, der als Vollkörper oder mit Gewichtsaussparungen ausgeführt sein kann, und den Freiraum in Längsrichtung L begrenzt bzw. abschließt, vgl. FIG.4B.

Das Kettenglied 100 ist im Querschnitt (senkrecht zur Längsrichtung), vgl. Rückansicht FIG.3(E), etwa quadratisch mit kompakten Abmessungen, vorzugsweise mit Breite ≤ 25mm × Höhe ≤ 25mm. Die Länge beträgt ein Vielfaches der Höhe bzw. Breite, sollte für kleine Radien im Umlenkbogen 7 jedoch möglichst kurz gestaltet sein, z.B. im Bereich vom 4-fachen bis max. zum 10-fachen der Bauhöhe.

FIG.3(C) zeigt in Draufsicht die der Umlenkachse A abgewandte Außenseite des Kettenglieds 100, vgl. auch FIG.5A. FIG.3(A) zeigt in Untersicht die der Umlenkachse A zugewandte Innenseite des Kettenglieds 100. An dieser Innenseite hat der männliche Längsabschnitt 101 im vorderen Endbereich einen quer zur Längsrichtung L vorstehenden Vorsprung 105, wie FIG.4B am besten zeigt. Der hier etwa quaderförmige bzw. plattenartige Vorsprung 105 fluchtet in etwa mit der Innenseite des anderen Längsabschnitts 102 bzw. der Seitenteile 102A, 102B.

Ebenfalls an der Innenseite hat der weibliche Längsabschnitt 102 am hinteren Endbereich eine plattenartige Querbrücke 106, die senkrecht zur Längsrichtung L verläuft und die Seitenteile 102A, 102B stabilisierend verbindet. Die Querbrücke 106 hat etwa die Wandstärke der Seitenteile 102A, 102B z.B. ca. 10-25% der Höhe bzw. Breite. Die Querbrücke 106 begrenzt in Längsrichtung zum vorderen Endbereich 101 hin eine Ausnehmung 107 an der Innenseite, welche hier durchgeht d.h. vom Freiraum 103 nach Außen mündet. Weiterhin zeigen FIG.3-4 einen außenseitige weitere Querbrücke 108 am hinteren Endbereich des Längsabschnitts 102. Die beiden Querbrücken 106, 108 verbinden und stabilisieren die Seitenteile 102A, 102B zu einer im Querschnitt kastenförmig bzw. umfänglich geschlossenen Struktur (vgl. FIG.3(E)) und wirken insbesondere einem ungewollten Aufspreizen der Seitenteile 102A, 102B am hinteren Ende des Längsabschnitts 102 entgegen.

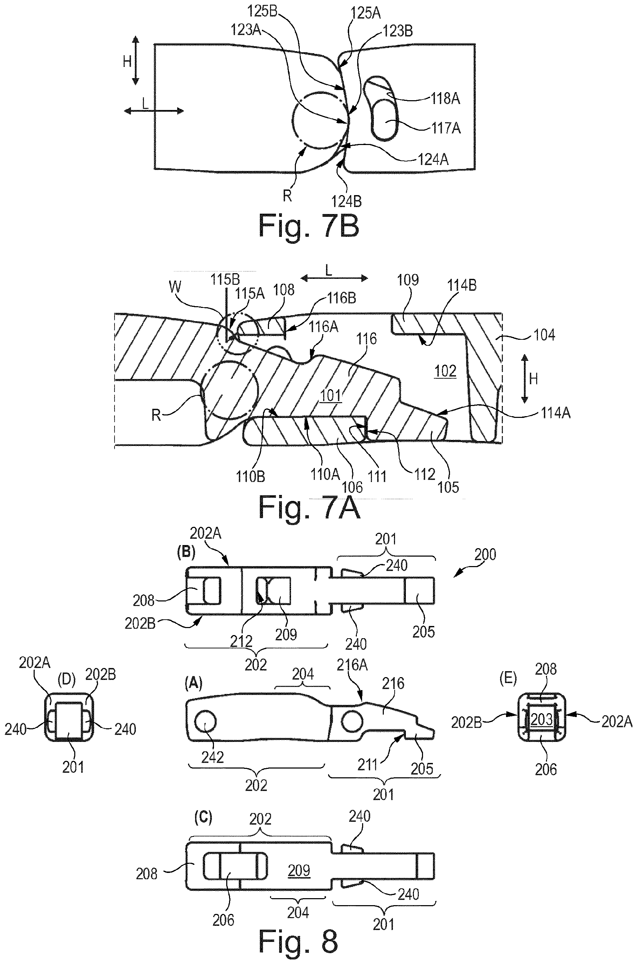

Wie FIG.5A (links) veranschaulicht, greift der Vorsprung 105 eines Kettenglieds 100 jeweils in die Ausnehmung 107 des im Kettenstrang verbundenen bzw. darauffolgenden Kettenglieds 100 und kann dabei vorderseitig an dessen innenseitige Querbrücke 106 angreifen um, gemäß dem ersten Erfindungsaspekt, eine Zugkraft zu übertragen bzw. einzuleiten. Diese Wirkung wird anhand der FIG.7A-7B näher erläutert.

In gestreckter Relativstellung zweier verbundener Kettenglieder 100, wie in FIG.7A gezeigt, liegt der zungenförmige erste Endbereich 101 mit einer zur Umlenkachse A zugewandten ersten Streckanschlagfläche 110A auf einer entgegengesetzten Streckanschlagfläche 110B der Querbrücke 106 des zweiten Endbereichs 102 flächig und kraftübertragend an. Hierdurch kann ein Teil der Last im gestreckten Zustand, insbesondere im freitragenden Teil des Obertrums 5 (FIG.1) zwischen den Kettengliedern 100 übertragen bzw. von der Stützkette 20 aufgefangen werden. Die in Strecklage wirksamen Streckanschlagflächen 110A, 110B liegen dabei im Wesentlichen parallel zur Längsrichtung L.

Nach dem ersten Aspekt wird eine verbesserte Krafteinleitung dadurch erzielt, dass der Vorsprung 105 mittels einer zur Längsrichtung L im wesentlichen senkrechten Anlagefläche 111 mit einer zugeordneten Gegenfläche 112 der Querbrücke 106 zusammenwirkt, insbesondere in Zugkraftrichtung. Durch das Angreifen der Anlagefläche 111 des Vorsprungs 105 an der Gegenfläche 112 der Querbrücke 106 wird in Strecklage ein Anteil der Last, insbesondere Gewichtslast, als Kraft parallel zur Längsrichtung L und in Richtung einer Zugkraft, in die Querbrücke 106 eingeleitet. Dies entspricht, wie FIG.3-4 bzw. FIG.7A zeigen, der Richtung, in welcher die Querbrücke 106 eine deutlich größere Abmessung und Biegesteifigkeit aufweist, als in Höhenrichtung H, ohne deren Baugröße erhöhen zu müssen. Somit wird eine deutlich robustere bzw. langlebigere Stützkette 20 bei gleich kompakten Außenabmessungen erzielt.

Diese vorteilhafte Wirkung nach dem ersten Aspekt kann weitergehend dadurch verstärkt werden, dass sich der in FIG.7A mit R schematisch angedeutete Drehpunkt der Gelenkverbindung nach außen hin (von der Umlenkachse A weg) verlagert, nämlich wenn die Kettenglieder 100, insbesondere der zungenartige erste Längsabschnitt 101, unter höheren Lasten verformen. Eine solche Verformung wird bestimmungsgemäß durch geeignete Dimensionierung, insbesondere des ersten Endbereichs 101 zugelassen, bis eine entsprechende Schulter bzw. Wirkfläche 115A an der Außenseite, insbesondere am Übergang zwischen dem ersten Längsabschnitt 101 und dem zweiten Längsabschnitt 102, an einer Widerlagerfläche 115B der gegenüberliegenden außenseitigen Querbrücke 108 anschlägt, wie in dem schematisch mit W bezeichneten Bereich in FIG.7A dargestellt. Bei Anschlag der Wirkfläche 115A an der Querbrücke 108 in diesem Bereich W (nicht in FIG.7 dargestellt) bildet die Querbrücke 108 somit ein Widerlager. Dadurch entsteht ein Hebeleffekt, welcher die günstigere Krafteinleitung über die Anlagefläche 111 des Vorsprungs 105 und zugeordnete Anlagefläche bzw. Gegenfläche 112 der Querbrücke 106 anteilig erhöht und somit die Flächenpressung zwischen den Streckanschlagflächen 110A, 110B anteilig oder weitgehend entlastet. Die Hebellänge wird durch die möglichst endseitige Anordnung des Vorsprungs 105 und dessen Anlagefläche 111 am ersten Längsabschnitt 101 definiert. Der Vorsprung 105 ist dazu im endseitigen vorderen Viertel des ersten Längsabschnitts 101 und die innenseitige Querbrücke 106 vorzugsweise in der abgewandten hinteren Hälfte des zweiten Längsabschnitts 102 angeordnet, wie FIG.3 bzw. FIG.7A zeigen.

Der Hebeleffekt kann durch eine geeignete lose bzw. einwertige Gelenkverbindung (vgl. dritter Aspekt) oder eine Gelenkverbindung mit Spiel in Höhenrichtung H optimiert werden. Die Einleitung der Last über die Anlageflächen 111, 112 kann bis hin zu einem überwiegenden Anteil erreichen.

Der erste Längsabschnitt 101 ist mit einem kleineren Querschnitt ausgeführt als der Freiraum 103 im zweiten Längsabschnitt 102, wie ein Vergleich der FIG.3(D) mit FIG.3(E) zeigt. Der erste Längsabschnitt 101 ist im Freiraum mit geringem Spiel und ohne Abriebkanten in der Längshöhenebene L-H schwenkbar und in dieser Ebene leichter verformbar dimensioniert als der kastenförmig verstärkte zweite Längsabschnitt 102 um die Zusammenwirkung der Wirkflächen 115A, 115B zu ermöglichen.

Ein weiterer entscheidender Vorteil der Zusammenwirkung von Vorsprung 105 und Querbrücke 106 liegt in der Übertragung der Zugkräfte in Strecklage des Obertrums 5, d.h. bei Ausfahren des Mitnehmers, welche dank der vorgeschlagenen Gestaltung überwiegend oder vollständig über die Anlageflächen 111, 112 und die Querbrücke 106 fließen können. Demnach kann die Gelenkverbindung, welche hinsichtlich eines Ermüdungsbruchs eine häufige Schwachstelle darstellt, ungeachtet ihrer Bauweise weitgehend von Zugkräften entlasten werden. Die Amplitude der Lastwechsel an der Gelenkverbindung kann demnach deutlich reduziert werden, was ebenfalls die Lebensdauer steigert.

Für eine hinsichtlich Kraftübertragung robuste Gestaltung ist der Vorsprung 105 mit seiner Anlagefläche 111 so ausgeführt, dass er sich über die gesamte Breite des ersten Längsabschnitts 101 (im Querschnitt zur Längsrichtung L) erstreckt, wie in FIG.3(B) und FIG.3(C) gezeigt. Beide können mit einem Überstand von ca. 10% der Höhe des Kettenglieds 100 (Abmessung in Höhenrichtung H) vorstehen. So wird eine vergleichsweise großflächige Anlagefläche 111 erzielt mit zugleich kompakter Bauweise des Kettenglieds 100. Für eine kompakte Bauweise ist die Ausnehmung 107 als vom Freiraum 103 ausgehender Durchbruch zur Innenseite ausgeführt. Die Ausnehmung 107 kann den Vorsprung 105 in Strecklage formschlüssig aufnehmen um eine zusätzliche Seitenstabilität des Umlenkbogens 7 zu bewirken.

Zur Begrenzung des relativen Schwenkwinkels in der bogenförmigen Relativstellung der Kettenglieder 100 im Umlenkbogen weisen die Kettenglieder 100 zusammenwirkende Bogenanschlagflächen 114A, 114B auf, wie am besten aus dem Vergleich der FIG.5A mit FIG.5B ersichtlich.

An der vom Vorsprung 105 abgewandte außenseitige des ersten Längsabschnitts 101 ist am vorderen Ende eine erste Bogenanschlagfläche 114A vorgesehen, welche in vollständig abgewinkelter Stellung (FIG.5A, rechts) mit einer gegenüberliegenden zweiten Bogenanschlagfläche 114B zusammenwirkt. Diese zweite Bogenanschlagfläche 114B ist, gemäß dem zweiten Erfindungsaspekt, an einem zusätzlichen Quersteg 109 vorgesehen und dem Freiraum 103 zugewandt. Der Quersteg 109 verbindet die Seitenteile 102A, 102B stabilisierend, ähnlich der Querbrücke 108, und geht zudem einteilig in den Rumpfbereich 104 über und wird somit durch diesen gegen Verbiegen verstärkt. Hierdurch wird eine hohe Stabilität der Anschläge in der bogenförmig gekrümmten Relativstellung der Kettenglieder 100 im Umlenkbogen 7 erreicht. Dank der weiteren Querstege 109 und daran gebildeter widerstandsfähiger Bogenanschlagfläche 114B gemäß dem zweiten Erfindungsaspekt wird eine vergleichsweise hohe Tragkraft des Umlenkbogens 7 der Stützkette erreicht, was u.a. für große freitragende Längen von Vorteil ist.

Weiterhin weist der erste Längsabschnitt 101 an der Außenseite einen vorstehenden Bereich 116 auf, welcher in bogenförmiger Stellung (FIG.5A, rechts) in eine weitere Aussparung zwischen dem Quersteg 109 und die Querbrücke 108 greift. Hierdurch kann der zungenförmige erste Längsabschnitt 101 mit dem zweiten Längsabschnitt 102 des nächsten Kettenglieds in bogenförmiger Stellung verkanten, indem eine weitere am vorstehenden Bereich 116 vorgesehene Wirkfläche 116A an einer weiteren Widerlagerfläche der außenseitigen Querbrücke 108 angreift bzw. verkantet, wie in FIG.5A veranschaulicht. Hierdurch überträgt die Stützkette 20 Zugkraft auch im Umlenkbogen 7 bzw. bei voll abgewinkelten Kettengliedern 100 d.h. wenn der Vorsprung 105 nicht in zugkraftübertragend wirksamer Stellung der Strecklage ist. Somit wird auch in dieser Stellung keine oder eine deutlich reduzierte Zugkraft über die Gelenkverbindung übertragen. Der vorstehende Bereich 116 bildet zudem eine Verstärkung des vorderen Endbereichs des Längsabschnitts 101 mit dem Vorsprung 105, vgl. FIG.7A.

Die vorgeschlagene Bauweise mit gegenüberliegenden Querbrücken 106, 108 und dem Quersteg 109 wird u.a. dadurch ermöglicht, dass die Kettenglieder 100 durch Zusammenstecken im Wesentlichen in Längsrichtung L miteinander verbunden werden, wie aus FIG.5A-5B ersichtlich. Der erste Längsabschnitt 101 ist in Arte einer zungenförmigen Spitze ausgeführt, die in den Freiraum 103 im zweiten Längsabschnitt 102 eines angrenzenden folgenden Kettenglieds 100 in Längsrichtung L einsteckbar ist.

Insbesondere um auch in Zwischenstellungen zwischen der voll abgewinkelten Bogenstellung im Umlenkbogen 7 und der Strecklage im Obertrum 5 eine Übertragung von Zugkräften zu ermöglichen, sind die Längsabschnitte 101, 102 zur Bildung einer Rastverbindung ausgeführt, die in Zwischenstellungen (FIG.5B) bei nominalen Zuglasten gegen Lösen in Längsrichtung L sichert. Jedes Kettenglied 100 hat dazu in dem einen Längsabschnitt 101 zwei gegenüberliegende und seitlich zur Längsrichtung vorragende Rastzapfen 117A, 117B, welche seitlich etwa bündig mit den Seitenteilen 102A, 102B enden. Jeder Rastzapfen 117A, 117B ist mit einer korrespondierenden Rastaussparung 118A, 118B im anderen Längsabschnitt 102 verrastbar. Die Rastaussparungen 118A, 118B sind im hinteren Bereich der Seitenteile 102A, 102B auf der Seite des Freiraums 103 vorgesehen, hier als Durchbrüche in den Seitenteilen 102A, 102B. Da die Kettenglieder 100 in Längsrichtung L zusammengesteckt werden haben die Rastzapfen 117A, 117B in Längsrichtung L zur Spitze des ersten Endbereichs 101 schräg zulaufende Einführschrägen, wie in FIG.3(B) und FIG.3(C) gezeigt. Weiterhin hat jedes Kettenglied 100 zur Erleichterung des Zusammensteckens Einführnuten 119A, 119B für die Rastzapfen 117A, 117B. Die Einführnuten 119A, 119B münden von der Einführöffnung am hinteren Ende des Endbereichs 102 ausgehend in die Aussparungen 118A, 118B und sind im Wesentlichen in Längsrichtung L ausgerichtet.

Aus FIG.6 und FIG.7B ist in Zusammenschau mit FIG.3-4 die Übertragung der Schubkräfte in diesem bevorzugten Ausführungsbeispiel ersichtlich. Die beiden Seitenbereiche 102A, 102B des zweiten Längsabschnitts 102 haben jeweils eine vordere Stirnfläche 121 und eine hintere Stirnfläche 122, die bei angrenzenden Kettengliedern 100 jeweils gegenüberliegen und bei Schubkraft auf das Obertrum 5 bzw. den Umlenkbogen 7 in Anschlag geraten, wie am besten aus dem Längsschnitt durch die Seitenteile 102A in FIG.6 ersichtlich. Die anschlagenden Stirnflächen 121, 122 übertragen dabei die Schubkraft von einem Kettenglied 100 auf das nächste. Der zungenförmige erste Längsabschnitt 101 und die Rastverbindung mittels Rastzapfen 117A, 117B und korrespondierenden Rastaussparung 118A, 118B sind vorzugsweise mit ausreichend Spiel in Längsrichtung L dimensioniert, damit keine Schubkräfte hierüber übertragen werden.

FIG.7B veranschaulicht neben der Formgebung der zusammenwirkenden Stirnflächen 121, 122 weiterhin den dritten, unabhängigen Erfindungsaspekt, gemäß welchem die Stirnflächen 121, 122 der beiden Seitenteile 102A, 102B auch die Gelenkverbindung in Art eines einwertigen (Loslager) in Form eines Kipplagers bilden. Hierzu ist ein Gelenkbereich 123A an der vorderen Stirnfläche 121 konvex gestaltet ist und ein zusammenwirkender Gelenkbereich 123B der hinteren Stirnfläche 122 ist konjugiert konkav gestaltet. Die Gelenkbereiche 123A, 123B können insbesondere als Kreiszylinder-Oberflächen ausgeführt sein mit einem Radius der durch den gestrichelten Kreisbereich R in FIG.7B schematisch angedeutet ist, wobei auch größere oder kleinere Radien möglich sind. Das durch die Gelenkbereiche 123A, 123B gebildete Kipplager gibt welches bei Schublast zumindest in Strecklage und dieser gegenüber geringem Winkel eine definierte Drehachse senkrecht zur L-H Ebene (Ebene der FIG.7B) vor. Ein wesentlicher Vorteil dieser Gestaltung liegt darin, dass das einwertige Gelenk keine Zugkraft übertragen und durch diese nicht überbeansprucht werden kann. Zudem wird ein Freiheitsgrad in Höhenrichtung H bereitgestellt, welcher besonders in Kombination mit der optimierten Krafteinleitung nach dem ersten Aspekt (vgl. FIG.7A) vorteilhaft ist. Auch unabhängig hiervon bietet die lose Gelenkverbindung anhand der Stirnflächen 121, 122 Vorteile u.a. hinsichtlich der Gestaltungsfreiheit und Flächenpressung bzw. Krafteinleitung der Schubkraft.

Wie weiterhin am besten in FIG.7B gezeigt, verlaufen die die Aussparungen 118A, 118B in der Längshöhenebene L-H kreisbogenförmig in den Seitenbereichen 102A, 102B entsprechend dem Drehpunkt der Gelenkbereiche 123A, 123B. Die Rastzapfen 117A, 117B können ebenfalls länglich gekrümmt gestaltet sein und ähnlich einer Kulissenführung bzw. Kurvenführung in den kreisbogenförmigen Aufnahmen 118A, 118B verlaufen.

Weiterhin bilden die Stirnflächen 121, 122 in Höhenrichtung beidseitig an jeweils an ihren Gelenkbereich 123A, 123B angrenzend gekrümmte Anlageflächen, nämlich für die bogenförmige bzw. gestreckte Stellung. Jede Stirnfläche 121, 122 ist in Höhenrichtung H unterteilt in drei Funktionsbereiche: eine Streckanlagefläche 125A bzw. 125B, den Gelenkbereich 123A bzw. 123B und eine Bogenanlagefläche 124A bzw. 124B. Die Streckanlageflächen 125A, 125B wirken in Strecklage zusammen, vgl. FIG.7B, insbesondere im freitragenden Trum 5. Die Bogenanlageflächen 124A, 124B wirken hingegen im Umlenkbogen 7 (bogenförmige Stellung) zusammen. Entsprechend sind die gegenüberliegenden Bogenanlageflächen 124A, 124B und Streckanlageflächen 125A, 125B zueinander passend konjugiert geformt, hier gekrümmt etwa kreisbogenförmig mit einem vergleichsweise großen Radius, deutlich Grösser als die Gelenkbereiche 123A, 123B, jedoch mit Mittelpunkten die auseinanderfallen.

FIG.8 zeigt ein alternatives Ausführungsbeispiel eines Kettenglieds 200, welches sich vom ersten dadurch unterscheidet, dass die spezielle Gelenkverbindung nach dem dritten Aspekt nicht verwirklicht ist, sondern eine konventionelle Gelenkverbindung mit Gelenkzapfen 240 und Gelenkaufnahme 242, welche ein Drehgelenk mit vorgegebener Drehachse definieren. Ansonsten sind die wesentlichen Merkmale des Kettenglieds 200 im Wesentlichen identisch zu dem aus FIG.3.

Auch beim Kettenglied 200 sind der erste Erfindungsaspekt, unter Verwendung eines Vorsprungs 205 am ersten Längsabschnitt 201 und einer Querbrücke 206 am zweiten Längsabschnitt 202, sowie der zweite Aspekt mit einer weiteren Querbrücke 208 und einem zusätzlichen Quersteg 209 verwirklicht. Die drei Aspekte der Erfindung sind jeweils für sich genommen vorteilhaft einsetzbar.

### Bezugszeichenliste

FIG.1-2 :
   1 Leitungsführungsvorrichtung
   2, 4 Anschlussstelle
   3 Versorgungsleitung
   5 Obertrum
   6 Untertrum
   7 Umlenkbogen
   10 Umhüllung (sog. "Pod")
   11 Klemmvorrichtungen
   12 Aufnahmekanal
   13, 14 Lagen
   20 Stützkette
   A Umlenkachse
   L Längsrichtung
FIG.3-7 :
   20 Stützkette
   100 Kettenglied
   101 erster/vorderer Längsabschnitt
   102 zweiter/hinterer Längsabschnitt
   102A, 102B Seitenteile
   103 Freiraum
   104 Rumpfbereich
   105 Vorsprung
   106 innenseitige Querbrücke
   107 innenseitige Ausnehmung
   108 außenseitige Querbrücke
   109 außenseitiger Quersteg
   110A, 110B Streckanschlagflächen
   111 Anlagefläche (an Vorsprung 105)
   112 Anlagefläche/Gegenfläche (an Querbrücke 106)
   114A, 114B Bogenanschlagflächen
   115A Wirkfläche
   115B Widerlagerfläche
   116 vorstehender Bereich
   116A weitere Wirkfläche
   116B weitere Widerlagerfläche
   117A, 117B Rastzapfen
   118A, 118B Rastaussparung
   119A, 119B Einführnuten
   121 vordere Stirnfläche
   122 hintere Stirnfläche
   123A, 123B Gelenkbereiche (an Stirnflächen)
   124A, 124B Bogenanlageflächen
   125A, 125B Streckanlageflächen
FIG.8
   200 Kettenglied
   201 erster/vorderer Längsabschnitt
   202 zweiter/hinterer Längsabschnitt
   202A, 202B Seitenteile
   203 Freiraum
   204 Rumpfbereich
   205 Vorsprung
   206 innenseitige Querbrücke
   207 innenseitige Ausnehmung
   208 außenseitige Querbrücke
   209 außenseitiger Quersteg
   211 Anlagefläche (an Vorsprung 105)
   212 Anlagefläche/Gegenfläche (an Querbrücke 106)
   240 Gelenkzapfen
   242 Gelenkaufnahme

## Patentansprüche

1. Stützkette (20) zum Stützen einer Leitungsführungsvorrichtung (1) mit einer flexiblen Umhüllung (10), wobei die Stützkette (20) gestreckte Stellungen zur Bildung gestreckter Trume (5,6) sowie eine bogenförmige Stellung zur Bildung eines Umlenkbogens (7) einnehmen kann und hierzu eine Vielzahl einzelner Kettenglieder (100; 200) mit einer Längsrichtung (L) aufweist, die gelenkig miteinander verbunden sind, wobei die Kettenglieder (100; 200) jeweils einen vorderen ersten Längsabschnitt (101; 201) umfassen sowie einen dazu komplementären hinteren zweiten Längsabschnitt (102; 202) umfassen mit zwei Seitenteilen (102A, 102B; 202A, 202B) und dazwischen einem Freiraum (103), in welchem der erste Längsabschnitt (101; 201) eines angrenzenden Kettenglieds angeordnet ist, und die Kettenglieder jeweils bezüglich des Umlenkbogens (7) eine Innenseite und eine Außenseite haben, **dadurch gekennzeichnet, dass**
- der erste Längsabschnitt (101; 201) in einem Endbereich und an der Innenseite einen quer zur Längsrichtung vorstehenden Vorsprung (105; 205) aufweist; und
- der zweite Längsabschnitt (102; 202) an der Innenseite eine die Seitenteile verbindende innenseitige Querbrücke (106; 206) mit einer Streckanschlagfläche (110B) für die Strecklage und eine an die Querbrücke (106; 206) in Längsrichtung vorderseitig angrenzende Ausnehmung (107; 207) aufweist;
- wobei in gestreckter Stellung der Vorsprung (105; 205) eines Kettenglieds in die Ausnehmung (107; 207) des verbundenen folgenden Kettenglieds (100; 200) und vorderseitig an dessen innenseitige Querbrücke (106; 206) greift.

2. Stützkette nach Anspruch 1, **dadurch gekennzeichnet, dass** der zweite Längsabschnitt (102) an der Außenseite und in einem hinteren Endbereich einen Queranschlag, insbesondere eine die Seitenteile verbindende außenseitige Querbrücke (108), aufweist welcher der Außenseite des ersten Längsabschnitts (101) eines angrenzenden Kettenglieds als Widerlager (115B) für die Strecklage gegenüberliegt.

3. Stützkette nach Anspruch 1 oder 2, **dadurch gekennzeichnet, dass** der Vorsprung (105) eine Anlagefläche (111) zur Anlage an der innenseitigen Querbrücke (106) bildet, welche im Wesentlichen senkrecht zur Längsrichtung (L) angeordnet ist.

4. Stützkette nach einem der Ansprüche 1 bis 3, **dadurch gekennzeichnet, dass** der erste und zweite Längsabschnitt (101, 102) in Strecklage zusammenwirkende Streckanschlagflächen (110A, 110B) aufweisen und dass der Vorsprung (105) und die innenseitige Querbrücke (106) zusammenwirkende Anlageflächen (111, 112) aufweisen, die im Wesentlichen senkrecht zu den Streckanschlagflächen (110A, 110B) liegen und so angeordnet sind, dass der Vorsprung (105) eines Kettenglieds in gestreckter Stellung mit seiner Anlagefläche (111) an der Anlagefläche (112) der innenseitigen Querbrücke (106) des folgenden Kettenglieds anliegt.

5. Stützkette nach einem der Ansprüche 1 bis 4, **dadurch gekennzeichnet, dass** der Vorsprung (105; 205), sich über die gesamte Breite des ersten Längsabschnitts im Querschnitt zur Längsrichtung erstreckt und/oder der Vorsprung, mit einem Überstand von mindestens 5%, vorzugsweise mindestens 10%, der Bauhöhe des Kettenglieds im Querschnitt zur Längsrichtung vorsteht.

6. Stützkette nach einem der Ansprüche 1 bis 5, **dadurch gekennzeichnet, dass** der Vorsprung (105; 205) im endseitigen vorderen Viertel des ersten Längsabschnitts (101; 201) angeordnet ist und die innenseitige Querbrücke (106; 206) vorzugsweise in der abgewandten hinteren Hälfte des zweiten Längsabschnitts (102; 202) angeordnet ist.

7. Stützkette nach einem der Ansprüche 1 bis 6, **dadurch gekennzeichnet, dass** die Ausnehmung (107) einen vom Freiraum (103) ausgehenden Durchbruch zur Innenseite bildet.

8. Stützkette nach einem der Ansprüche 1 bis 7, **dadurch gekennzeichnet, dass** jedes Kettenglied (100) in seinem zweiten Längsabschnitt an der Außenseite einen außenseitigen Quersteg (109), wobei Querbrücke und Quersteg den Freiraum überbrückend die Seitenteile verbinden, und dass die innenseitige Querbrücke (106) in gestreckter Stellung mit einer innenseitigen Streckanschlagfläche (110A) des ersten Längsabschnitts zusammenwirkt und der außenseitige Quersteg (109) in bogenförmiger Stellung mit einer außenseitigen Bogenanschlagfläche (114A) des ersten Längsabschnitts (101) zusammenwirkt.

9. **Stützkette** (20) zum Stützen einer Leitungsführungsvorrichtung (1) mit einer flexiblen Umhüllung (10), insbesondere nach Anspruch 1, wobei die Stützkette (20) gestreckte Stellungen zur Bildung gestreckter Trume (5, 6) sowie eine bogenförmige Stellung zur Bildung eines Umlenkbogens (7) einnehmen kann und hierzu eine Vielzahl einzelner Kettenglieder (100; 200) mit einer Längsrichtung (L) aufweist, die gelenkig miteinander verbunden sind, wobei die Kettenglieder jeweils einen ersten Längsabschnitt (101; 201) sowie einen dazu komplementären zweiten Längsabschnitt (201; 202) umfassen mit zwei Seitenteilen (102A, 102B; 202A, 202B) und dazwischen einem Freiraum (103; 203), in welchem der erste Längsabschnitt eines angrenzenden folgenden Kettenglieds angeordnet ist und die Kettenglieder (100; 200) jeweils eine Innenseite und eine Außenseite haben, wobei jedes Kettenglied (100; 200) in seinem zweiten Längsabschnitt (102; 202) an der Außenseite eine außenseitige Querverbindung (109; 209) und an der Innenseite eine innenseitige Querverbindung (106; 206) aufweist, welche den Freiraum (103; 203) überbrücken und die Seitenteile (102A, 102B; 202A, 202B) verbinden, und dass die innenseitige Querverbindung (106; 206) in gestreckter Stellung mit einer innenseitigen Streckanschlagfläche (110A, 210A) des ersten Längsabschnitts zusammenwirkt und die außenseitige Querverbindung (109; 209) in bogenförmiger Stellung mit einer außenseitigen Bogenanschlagfläche (114A, 214A) des ersten Längsabschnitts (101; 201) zusammenwirkt.

10. Stützkette nach Anspruch 9, **dadurch gekennzeichnet, dass** die außenseitige Querverbindung als Quersteg (109; 209) und die innenseitige Querverbindung als Querbrücke (106; 206) ausgeführt ist;
und vorzugsweise jedes Kettenglied (100; 200) in seinem zweiten Längsabschnitt an der Außenseite in einem vorderen Bereich den Quersteg (109; 209) und in einem hinteren Endbereich eine außenseitige Querbrücke (108; 208) aufweist wobei der erste Längsabschnitt (101; 201) an der Außenseite einen vorstehenden Bereich (116; 216) aufweist, welcher in bogenförmiger Stellung zwischen den Quersteg (109; 209) und die außenseitige Querbrücke (108; 208) greift, und wobei der erste Längsabschnitt vorzugsweise mit dem zweiten Längsabschnitt in bogenförmiger Stellung verkantet (116A, 116B) .

11. Stützkette nach einem der voranstehenden Ansprüche 1 bis 10, insbesondere nach Anspruch 9, **dadurch gekennzeichnet, dass** der erste Längsabschnitt (101; 201) in den Freiraum (103; 203) im zweiten Längsabschnitt (102; 202) eines angrenzenden folgenden Kettenglieds in Längsrichtung (L) einsteckbar ist.

12. Stützkette nach einem der voranstehenden Ansprüche 1 bis 11, insbesondere nach Anspruch 11, wobei die Längsabschnitte zur Bildung einer Rastverbindung gegen Lösen in Längsrichtung ausgeführt sind, jedes Kettenglied in dem einen Längsabschnitt zwei gegenüberliegende und seitlich zur Längsrichtung vorragende Zapfen (117A, 117B) aufweist, wobei jeder Zapfen mit einer entsprechenden Aussparung (118A, 118B) im anderen Längsabschnitt verrastbar ist, **dadurch gekennzeichnet, dass** die Zapfen (117A, 117B) in Längsrichtung schräg zulaufende Einführschrägen aufweisen, vorzugsweise wobei jedes Kettenglied in die Aussparungen (118A, 118B) mündende Einführnuten (119A, 119B) für die Zapfen (117A, 117B) aufweist, welche sich im Wesentlichen in Längsrichtung erstrecken.

13. **Stützkette** (20) zum Stützen einer Leitungsführungsvorrichtung (1) mit einer flexiblen Umhüllung (10), wobei die Stützkette (20) gestreckte Stellungen zur Bildung gestreckter Trume (5,6) sowie eine bogenförmige Stellung zur Bildung eines Umlenkbogens (7) einnehmen kann und hierzu eine Vielzahl einzelner Kettenglieder (100) mit einer Längsrichtung (L) aufweist, die gelenkig miteinander verbunden sind, wobei die Kettenglieder (100) jeweils einen vorderen ersten Längsabschnitt (101) sowie einen dazu komplementären hinteren zweiten Längsabschnitt (102) umfassen mit zwei Seitenteilen (102A, 102B) und dazwischen einem Freiraum (103), in welchem der erste Längsabschnitt (101) eines angrenzenden folgenden Kettenglieds angeordnet ist, und
beide Seitenteile (102A, 102B) des zweiten Längsabschnitts jeweils eine vordere Stirnfläche (121) und eine hintere Stirnfläche (122) aufweisen, die bei angrenzenden Kettengliedern gegenüberliegen,
wobei die vordere Stirnfläche (121) einen Gelenkbereich (123A) bildet und die hintere Stirnfläche (122) einen komplementären Gelenkbereich (123B) bildet sodass die jeweiligen Gelenkbereiche der vorderen Stirnfläche (121) eines Kettenglieds und der hinteren Stirnfläche (102) eines angrenzenden Kettenglieds zur gelenkigen Verbindung dieser beiden Kettenglieder (100) zusammenwirken und bei einer Schubbelastung der Stützkette eine Schwenkachse zum Verschwenken beider Kettenglieder definieren,
vorzugsweise weiterhin wobei
- der Gelenkbereich (123A) der vorderen Stirnfläche (121) konvex gestaltet ist und der Gelenkbereich (123B) der hinteren Stirnfläche konkav gestaltet ist, und/oder
- die Gelenkbereiche für eine schwenkbare Gelenkverbindung mit einer Schwenkachse senkrecht zur Längsrichtung, ausgeführt sind.

14. Stützkette nach Anspruch 13, **dadurch gekennzeichnet, dass** die Stirnflächen in Höhenrichtung zumindest einseitig, vorzugsweise beidseitig zum Gelenkbereich jeweils eine Anlagefläche (124A, 124B), vorzugsweise eine gekrümmte Anlagefläche, für die bogenförmige bzw. gestreckte Stellung bilden.

15. Stützkette nach einem der voranstehenden Ansprüche 1 bis 14, insbesondere nach Anspruch 14, wobei jedes Kettenglied in dem einen Längsabschnitt zwei gegenüberliegende und seitlich zur Längsrichtung vorragende Zapfen (117A, 117B) aufweist, wobei jeder Zapfen mit einer entsprechenden Aussparung (118A, 118B) im anderen Längsabschnitt verrastbar ist, **dadurch gekennzeichnet, dass** die Aussparungen (118A, 118B) in einer Längsebene kreisbogenförmig in den Seitenteilen verlaufen.

16. Stützkette nach einem der Ansprüche 1 bis 15, **dadurch gekennzeichnet, dass** das Kettenglied einstückig aus Kunststoff, insbesondere im Spritzgussverfahren, hergestellt ist.

17. Leitungsführungsvorrichtung (1), insbesondere für Reinraumanwendungen, zum geschützten Führen von Versorgungsleitungen (3) wie Kabeln, Schläuchen oder dergleichen zwischen zwei Anschlussstellen (2, 4), von denen mindestens eine relativ zur anderen beweglich ist, wobei die Leitungsführungsvorrichtung eine Längsrichtung (L) aufweist und hin- und hergehend unter Bildung von zwei Trumen (5, 6) und eines Umlenkbogens (7) verfahrbar ist, umfassend:
- eine flexible Umhüllung (10) mit einer Anzahl nebeneinander angeordneter und in der Längsrichtung erstreckter Aufnahmekanäle (12) für jeweils mindestens eine Versorgungsleitung (3), und
mindestens eine Stützkette (20), welche zum Stützen der Leitungsführungsvorrichtung (1) in einem Aufnahmekanal (12) anordenbar ist, wobei die mindestens eine Stützkette eine Stützkette nach einem der vorstehenden Ansprüche ist.

## Claims

1. A support chain (20) for supporting a line guide device (1) with a flexible envelope (10), wherein the support chain (20) may adopt extended positions to form extended runs (5, 6) and an arcuate position to form a deflection arc (7) and to this end has a plurality of individual chain links (100; 200) with a longitudinal direction (L) which are connected together in articulated manner, wherein the chain links (100; 200) each comprise a first, front longitudinal portion (101; 201) and comprise a second, rear longitudinal portion (102; 202) complementary thereto with two side parts (102A, 102B; 202A, 202B) and a space (103) therebetween, in which the first longitudinal portion (101; 201) of an adjacent chain link is arranged, and the chain links each have an inside and an outside relative to the deflection arc (7), **characterized in that**
- in an end region and on the inside, the first longitudinal portion (101; 201) has a projection (105; 205) protruding transversely of the longitudinal direction; and
- the second longitudinal portion (102; 202) on the inside has an inside cross-bridge (106; 206) connecting the side parts, with an extended stop face (110B) for the extended position, and a recess (107; 207) adjoining the cross-bridge (106; 206) at the front in the longitudinal direction;
- wherein, in the extended position, the projection (105; 205) of one chain link engages in the recess (107; 207) of the connected following chain link (100; 200) and at the front on the inside cross-bridge (106; 206) thereof.

2. The support chain according to Claim 1, **characterized in that** at the outside and in a rear end region, the second longitudinal portion (102) has a transverse stop, in particular an outside cross-bridge (108) connecting the side parts, which lies opposite the outside of the first longitudinal portion (101) of an adjacent chain link as abutment (115B) for the extended position.

3. The support chain according to Claim 1 or 2, **characterized in that** the projection (105) forms a contact face (111) for resting against the inside cross-bridge (106), which is arranged substantially perpendicular to the longitudinal direction (L).

4. The support chain according to one of Claims 1 to 3, **characterized in that** the first and second longitudinal portions (101, 102) have stop faces (110A, 110B) which interact in the extended position and **in that** the projection (105) and the inside cross-bridge (106) have interacting contact faces (111, 112) which lie substantially perpendicular to the extended stop faces (110A, 110B) and are arranged such that the projection (105) of one chain link rests, in the extended position, with its contact face (111) against the contact face (112) of the inside cross-bridge (106) of the following chain link.

5. The support chain according to one of Claims 1 to 4, **characterized in that** the projection (105; 205) extends over the entire width of the first longitudinal portion cross-sectionally relative to the longitudinal direction and/or the projection projects with a protrusion of at least 5%, preferably at least 10%, of the structural height of the chain link cross-sectionally relative to the longitudinal direction.

6. The support chain according to one of Claims 1 to 5, **characterized in that** the projection (105; 205) is arranged in the terminal front quarter of the first longitudinal portion (101; 201) and the inside cross-bridge (106; 206) is preferably arranged in the remote rear half of the second longitudinal portion (102; 202).

7. The support chain according to one of Claims 1 to 6, **characterized in that** the recess (107) forms an opening from the space (103) toward the inside.

8. The support chain according to one of Claims 1 to 7, **characterized in that** each chain link (100) includes an outside crosspiece (109) on the outside in its second longitudinal portion, wherein cross-bridge and crosspiece connect the side parts, spanning the space, and **in that** the inside cross-bridge (106) interacts in the extended position with an inside extended stop face (110A) of the first longitudinal portion and the outside crosspiece (109) interacts in the arcuate position with an outside arc stop face (114A) of the first longitudinal portion (101).

9. **A support chain** (20) for supporting a line guide device (1) with a flexible envelope (10), in particular according to Claim 1, wherein the support chain (20) may adopt extended positions to form extended runs (5, 6) and an arcuate position to form a deflection arc (7) and to this end has a plurality of individual chain links (100; 200) with a longitudinal direction (L) which are connected together in articulated manner, wherein the chain links each comprise a first longitudinal portion (101; 201) and a second longitudinal portion (201; 202) complementary thereto with two side parts (102A, 102B; 202A, 202B) and a space (103; 203) therebetween, in which the first longitudinal portion of an adjacent following chain link is arranged, and the chain links (100; 200) each have an inside and an outside, wherein each chain link (100; 200) includes an outside cross-connection (109; 209) on the outside in its second longitudinal portion (102; 202) and an inside cross-connection (106; 206) on the inside, which span the space (103; 203) and connect the side parts (102A, 102B; 202A, 202B), and in that the inside cross-connection (106; 206) interacts in the extended position with an inside extended stop face (110A, 210A) of the first longitudinal portion and the outside cross-connection (109; 209) interacts in the arcuate position with an outside arc stop face (114A, 214A) of the first longitudinal portion (101; 201) .

10. The support chain according to Claim 9, **characterized in that** the outside cross-connection is embodied as a crosspiece (109; 209) and the inside cross-connection is embodied as a cross-bridge (106; 206);
and preferably each chain link (100; 200) includes, in its second longitudinal portion, the crosspiece (109; 209) on the outside in the front region and an outside cross-bridge (108; 208) in a rear end region; wherein the first longitudinal portion (101; 201) includes a protruding region (116; 216) on the outside which engages in the arcuate position between the crosspiece (109; 209) and the outside cross-bridge (108; 208), and wherein the first longitudinal portion preferably wedges together with the second longitudinal portion in the arcuate position (116A, 116B).

11. The support chain according to one of preceding Claims 1 to 10, in particular according to Claim 9, **characterized in that** the first longitudinal portion (101; 201) is insertable into the space (103; 203) in the second longitudinal portion (102; 202) of an adjacent following chain link in the longitudinal direction (L).

12. The support chain according to one of preceding Claims 1 to 11, in particular according to Claim 11, wherein the longitudinal portions are embodied to form a latched connection against detachment in the longitudinal direction, each chain link having, in the one longitudinal portion, two opposing pins (117A, 117B) projecting laterally relative to the longitudinal direction, wherein each pin is latchable together with a corresponding cut-out (118A, 118B) in the other longitudinal portion, **characterized in that** the pins (117A, 117B) have insertion bevels tapering obliquely in the longitudinal direction L, preferably wherein each chain link includes insertion grooves (119A, 119B) for the pins (117A, 117B) opening into the cut-outs (118A, 118B) and extending substantially in the longitudinal direction.

13. **A support chain** (20) for supporting a line guide device (1) with a flexible envelope (10), wherein the support chain (20) may adopt extended positions to form extended runs (5, 6) and an arcuate position to form a deflection arc (7) and to this end has a plurality of individual chain links (100) with a longitudinal direction (L) which are connected together in articulated manner, wherein the chain links (100) each comprise a first, front longitudinal portion (101) and a second, rear longitudinal portion (102) complementary thereto with two side parts (102A, 102B) and a space (103) therebetween, in which the first longitudinal portion (101) of an adjacent following chain link is arranged, and
both side parts (102A, 102B) of the second longitudinal portion each include a front end face (121) and a rear end face (122), which lie opposite one another in the case of adjacent chain links,
wherein
the front end face (121) forms a joint region (123A) and the rear end face (122) forms a complementary joint region (123B), such that the respective joint regions of the front end face (121) of one chain link and the rear end face (102) of an adjacent chain link interact for articulated connection of these two chain links (100) and, in the event of shear loading of the support chain, define a swivel axis for swiveling the two chain links,
preferably furthermore wherein
- the joint region (123A) of the front end face (121) is convexly configured and the joint region (123B) of the rear end face is concavely configured, and/or
- the joint regions are embodied for a swivelable articulated connection with a swivel axis perpendicular to the longitudinal direction.

14. The support chain according to Claim 13, **characterized in that** the end faces in each case form in the heightwise direction at least on one side, preferably on both sides of the joint region, a contact face (124A, 124B), preferably a curved contact face, for the arcuate or extended position.

15. The support chain according to one of preceding Claims 1 to 14, in particular according to Claim 14, wherein, in the one longitudinal portion, each chain link includes two opposing pins (117A, 117B) projecting laterally relative to the longitudinal direction, wherein each pin is latchable together with a corresponding cut-out (118A, 118B) in the other longitudinal portion, **characterized in that** the cut-outs (118A, 118B) run in arc of a circle-shaped manner in the side parts in a longitudinal plane.

16. The support chain according to one of Claims 1 to 15, **characterized in that** the chain link is produced in one piece from plastics material, in particular using the injection molding method.

17. A line guide device (1), in particular for cleanroom applications, for protected guidance of supply lines (3) such as cables, hoses or the like between two connection points (2, 4), at least one of which is mobile relative to the other, wherein the line guide device has a longitudinal direction (L) and is displaceable to-and-fro forming two runs (5, 6) and a deflection arc (7), comprising:
- a flexible envelope (10) with a number of receiving ducts (12) arranged next to one another and extending in the longitudinal direction, in each case for at least one supply line (3), and
at least one support chain (20), which is arrangeable in a receiving duct (12) to support the line guide device (1), wherein the at least one support chain is a support chain according to one of the preceding claims.

## Revendications

1. Chaîne de support (20) pour supporter un dispositif de guidage de conduites (1) avec une enveloppe flexible (10), la chaîne de support (20) pouvant prendre des positions étirées pour former des brins étirés (5, 6) ainsi qu'une position en forme d'arc pour former un arc de renvoi (7) et présentant à cet effet une pluralité de maillons de chaîne individuels (100; 200) avec une direction longitudinale (L), qui sont reliés entre eux de manière articulée, les maillons de chaîne (100; 200) comprennent chacun un premier tronçon longitudinal avant (101; 201) ainsi qu'un deuxième tronçon longitudinal arrière (102; 202) complémentaire à celui-ci, avec deux parties latérales (102A, 102B; 202A, 202B) et entre celles-ci un espace libre (103), dans lequel est disposé le premier tronçon longitudinal (101; 201) d'un maillon de chaîne adjacent, et les maillons de chaîne ont chacun un côté intérieur et un côté extérieur par rapport à l'arc de renvoi (7),
**caractérisée en ce que**
- le premier tronçon longitudinal (101; 201) présente dans une zone d'extrémité et sur le côté intérieur une saillie (105; 205) faisant saillie transversalement à la direction longitudinale; et
- le deuxième tronçon longitudinal (102; 202) présente sur le côté intérieur un pont transversal (106; 206) reliant les parties latérales, avec une surface de butée d'étirement (110B) pour la position étirée et un évidement (107; 207) adjacent au pont transversal (106; 206) sur le côté avant dans la direction longitudinale;
- la saillie (105; 205) d'un maillon de chaîne s'engageant, en position étirée, dans l'évidement (107; 207) du maillon de chaîne suivant (100; 200) relié et, côté avant, contre son pont transversal (106; 206) côté intérieur.

2. Chaîne de support selon la revendication 1, **caractérisée en ce que** le deuxième tronçon longitudinal (102) présente sur le côté extérieur et dans une zone d'extrémité arrière une butée transversale, en particulier un pont transversal (108) côté extérieur reliant les parties latérales, qui fait face au côté extérieur du premier tronçon longitudinal (101) d'un maillon de chaîne adjacent comme butée (115B) pour la position étirée.

3. Chaîne de support selon la revendication 1 ou 2, **caractérisée en ce que** la saillie (105) forme une surface d'appui (111) pour l'appui sur le pont transversal intérieur (106), qui est disposé sensiblement perpendiculairement à la direction longitudinale (L).

4. Chaîne de support selon l'une quelconque des revendications 1 à 3, **caractérisée en ce que** les premier et deuxième tronçons longitudinaux (101, 102) présentent des surfaces de butée d'étirement (110A, 110B) coopérant en position étirée et **en ce que** la saillie (105) et le pont transversal (106) présentent des surfaces d'appui (111, 112) coopérant, qui sont sensiblement perpendiculaires aux surfaces de butée d'étirage (110A, 110B) et qui sont disposées de telle sorte que la saillie (105) d'un maillon de chaîne, en position étirée, s'applique par sa surface d'appui (111) contre la surface d'appui (112) du pont transversal (106) côté intérieur du maillon de chaîne suivant.

5. Chaîne de support selon l'une quelconque des revendications 1 à 4, **caractérisée en ce que** la saillie (105; 205) s'étend sur toute la largeur de la première tronçon longitudinale en coupe transversale par rapport à la direction longitudinale et/ou la saillie dépasse d'au moins 5%, de préférence d'au moins 10% de la hauteur de construction du maillon de chaîne en coupe transversale par rapport à la direction longitudinale.

6. Chaîne de support selon l'une quelconque des revendications 1 à 5, **caractérisée en ce que** la saillie (105; 205) est disposée dans le quart avant d'extrémité du premier tronçon longitudinal (101; 201) et le pont transversal intérieur (106; 206) est de préférence disposé dans la moitié arrière détournée du deuxième tronçon longitudinal (102; 202).

7. Chaîne de support selon l'une des revendications 1 à 6, **caractérisée en ce que** l'évidement (107) forme une ouverture vers le côté intérieur partant de l'espace libre (103).

8. Chaîne de support selon l'une quelconque des revendications 1 à 7, **caractérisée en ce que** chaque maillon de chaîne (100) comporte, dans son deuxième tronçon longitudinal, une barrette transversale extérieure (109) sur le côté extérieur, le pont transversale et la barrette transversale reliant les parties latérales en pontant l'espace libre, et **en ce que** le pont transversal (106) côté intérieur coopère, en position étirée, avec une surface de butée d'étirement (110A) côté intérieur du premier tronçon longitudinal, et le pont transversal (109) côté extérieur coopère, en position arquée, avec une surface de butée d'arc (114A) côté extérieur du premier tronçon longitudinal (101).

9. Chaîne de support (20) pour supporter un dispositif de guidage de conduites (1) avec une enveloppe flexible (10), en particulier selon la revendication 1, la chaîne de support (20) pouvant prendre des positions étirées pour former des brins étirés (5, 6) ainsi qu'une position en forme d'arc pour former un arc de renvoi (7) et comprenant à cet effet une pluralité de maillons de chaîne individuels (100; 200) avec une direction longitudinale (L), qui sont reliés entre eux de manière articulée, les maillons de chaîne comprenant chacun un premier tronçon longitudinal (101; 201) ainsi qu'un deuxième tronçon longitudinal (201; 202) complémentaire de celui-ci avec deux parties latérales (102A, 102B; 220A, 202B) et entre celles-ci un espace libre (103; 203), dans lequel est disposé le premier tronçon longitudinal d'un maillon de chaîne suivant adjacent et les maillons de chaîne (100; 200) ont chacun un côté intérieur et un côté extérieur, chaque maillon de chaîne (100; 200) ayant dans sa deuxième tronçon longitudinale (102; 202), sur le côté extérieur, une liaison transversale extérieure (109; 209) et, sur le côté intérieur, une liaison transversale intérieure (106; 206) qui pontent l'espace libre (103; 203) et relient les parties latérales (102A, 102B; 202A, 202B), et la liaison transversale côté intérieur (106; 206) coopérant, en position étirée, avec une surface de butée d'étirement côté intérieur (110A, 210A) de la première tronçon longitudinale, et la liaison transversale côté extérieur (109; 209) coopérant, en position arquée, avec une surface de butée d'arc côté extérieur (114A, 214A) de la première tronçon longitudinale (101; 201).

10. Chaîne de support selon la revendication 9, **caractérisée en ce que** la liaison transversale côté extérieur est réalisée sous forme de barrette transversale (109; 209) et la liaison transversale côté intérieur sous forme de pont transversal (106; 206);
et de préférence chaque maillon de chaîne (100; 200) présente dans sa deuxième tronçon longitudinale sur le côté extérieur dans une zone avant la barrette transversale (109; 209) et dans une zone d'extrémité arrière un pont transversal (108; 208) côté extérieur, la première tronçon longitudinale (101; 201) présentant sur le côté extérieur une zone en saillie (116; 216) qui, en position arquée, s'engage entre la barrette transversale (109; 209) et le pont transversal côté extérieur (108; 208), et la première tronçon longitudinale se coinçant de préférence avec la deuxième tronçon longitudinale en position arquée (116A, 116B).

11. Chaîne de support selon l'une quelconque des revendications 1 à 10 précédentes, en particulier selon la revendication 9, **caractérisée en ce que** le premier tronçon longitudinal (101; 201) peut être inséré dans l'espace libre (103; 203) dans le deuxième tronçon longitudinal (102; 202) d'un maillon de chaîne suivant adjacent dans la direction longitudinale (L).

12. Chaîne de support selon l'une quelconque des revendications 1 à 11 précédentes, en particulier selon la revendication 11, dans laquelle les tronçons longitudinaux sont conçus pour former une liaison par encliquetage anti-desserrage dans la direction longitudinale, chaque maillon de chaîne comporte, dans l'un des tronçons longitudinaux, deux tenons (117A, 117B) opposés et faisant saillie latéralement par rapport à la direction longitudinale, chaque tenon étant engagé dans un évidement correspondant (118A, 118B) dans l'autre tronçon longitudinale, **caractérisée en ce que** les tenons (117A, 117B) présentent des chanfreins d'introduction se terminant en oblique dans la direction longitudinale, de préférence chaque maillon de chaîne présentant des rainures d'introduction (119A, 119B) pour les tenons (117A, 117B) débouchant dans les évidements (118A, 118B), qui s'étendent essentiellement dans la direction longitudinale.

13. Chaîne de support (20) pour supporter un dispositif de guidage de conduites (1) avec une enveloppe flexible (10), la chaîne de support (20) pouvant prendre des positions étirées pour former des brins étirés (5, 6) ainsi qu'une position en forme d'arc pour former un arc de renvoi (7) et présentant à cet effet une pluralité de maillons de chaîne individuels (100) avec une direction longitudinale (L), qui sont reliés entre eux de manière articulée, les maillons de chaîne (100) comprenant chacun un premier tronçon longitudinal avant (101) ainsi qu'un deuxième tronçon longitudinal arrière (102) complémentaire à celui-ci, avec deux parties latérales (102A, 102B) et entre celles-ci un espace libre (103), dans lequel est disposé le premier tronçon longitudinal (101) d'un maillon de chaîne suivant adjacent, et les deux parties latérales (102A, 102B) du deuxième tronçon longitudinale ayant chacune une surface frontale avant (121) et une surface frontale arrière (122) qui sont opposées en cas des maillons de chaîne adjacents, la surface frontale avant (121) formant une zone d'articulation (123A) et la surface frontale arrière (122) formant une zone d'articulation complémentaire (123B), de sorte que les zones d'articulation respectives de la surface frontale avant (121) d'un maillon de chaîne et de la surface frontale arrière (102) d'un maillon de chaîne adjacent coopèrent pour relier de manière articulée ces deux maillons de chaîne (100) et définissent un axe de pivotement pour faire pivoter les deux maillons de chaîne lors d'une charge de poussée de la chaîne de support, de préférence en outre dans lequel
- la zone d'articulation (123A) de la surface frontale avant (121) est de forme convexe et la zone d'articulation (123B) de la surface frontale arrière est de forme concave, et/ou
- les zones d'articulation sont réalisées pour une liaison articulée pivotante avec un axe de pivotement perpendiculaire à la direction longitudinale.

14. Chaîne de support selon la revendication 13, **caractérisée en ce que** les surfaces frontales forment, dans le sens de la hauteur, au moins d'un côté, de préférence des deux côtés par rapport à la zone d'articulation, respectivement une surface d'appui (124A, 124B), de préférence une surface d'appui courbée, pour la position arquée ou étirée.

15. Chaîne de support selon l'une quelconque des revendications précédentes 1 à 14, en particulier selon la revendication 14, dans laquelle chaque maillon de la chaîne comporte, dans l'un des tronçons longitudinaux, deux tenons (117A, 117B) opposés et faisant saillie latéralement par rapport à la direction longitudinale, chaque tenon pouvant être enclenché dans un évidement correspondant (118A, 118B) ménagé dans l'autre tronçon longitudinal, **caractérisée en ce que** les évidements (118A, 118B) s'étendent en arc de cercle dans un plan longitudinal dans les parties latérales.

16. Chaîne de support selon l'une des revendications 1 à 15, **caractérisée en ce que** le maillon de chaîne est fabriqué d'une seule pièce en matière plastique, notamment par moulage par injection.

17. Dispositif de guidage de conduites (1), en particulier pour des applications en salle blanche, pour le guidage protégé de conduites d'alimentation (3) telles que des câbles, des tuyaux ou similaires entre deux points de raccordement (2, 4), dont au moins un est mobile par rapport à l'autre, le dispositif de guidage de conduites présentant une direction longitudinale (L) et pouvant être déplacé en va-et-vient en formant deux brins (5, 6) et un arc de renvoi (7), comprenant:
- une enveloppe flexible (10) avec un certain nombre de canaux de réception (12) disposés les uns à côté des autres et s'étendant dans la direction longitudinale pour respectivement au moins une conduite d'alimentation (3), et
au moins une chaîne de support (20) qui peut être disposée dans un canal de réception (12) pour supporter le dispositif de guidage de conduite (1), ladite au moins une chaîne de support étant une chaîne de support selon l'une des revendications précédentes.
